# EUROPÄISCHE PATENTSCHRIFT

(11) **EP 3 797 460 B1**
(45) Veröffentlichungstag und Bekanntmachung des Hinweises auf die Patenterteilung: **02.09.2026**
(21) Anmeldenummer: 18746632.1
(22) Anmeldetag: 17.07.2018
(51) Int. Cl.: H02H 3/08, H02H 3/087, H02H 3/093, H02H 3/10, H02H 3/18, H02H 3/24, H02H 3/247, H02H 3/44, H02M 1/32, H02H 7/26, H02J 3/36, H02M 7/483

(54) **VERFAHREN UND VORRICHTUNG ZUM ERKENNEN EINES FEHLERS IN EINER HGÜ-LEITUNG UND ERZEUGEN EINES AUSLÖSESIGNALS FÜR EINEN GLEICHSTROMLEISTUNGSSCHALTER**
METHOD AND DEVICE FOR DETECTING AN ERROR IN A HIGH-VOLTAGE DIRECT CURRENT TRANSMISSION LINE AND GENERATING AN ACTIVATING SIGNAL FOR A DIRECT CURRENT CIRCUIT BREAKER
PROCÉDÉ ET DISPOSITIF POUR DÉTECTER UN DÉFAUT DANS UNE LIGNE DE TRANSPORT D'ÉNERGIE ÉLECTRIQUE EN COURANT CONTINU HAUTE TENSION ET POUR GÉNÉRER UN SIGNAL DE DÉCLENCHEMENT DESTINÉ À UN DISJONCTEUR À COURANT CONTINU

(43) Veröffentlichungstag der Anmeldung: 31.03.2021
(73) Patentinhaber: Siemens Energy Global GmbH & Co. KG, 81739 München (DE)
(72) Erfinder: BRANTL, Christina, 52070 Aachen (DE); ERGIN, Dominik, 91083 Baiersdorf (DE); SCHÖN, Andre, 91058 Erlangen (DE); TÜNNERHOFF, Philipp Christian, 44149 Dortmund (DE)
(86) Internationale Anmeldenummer: PCT/EP2018/069397
(87) Internationale Veröffentlichungsnummer: WO 2020/015820

(56) Entgegenhaltungen:
- WO-A1-2011/157305
- WO-A1-2016/026524
- GB-A- 2 537 850

## Beschreibung

Die Erfindung betrifft ein Verfahren zum Erzeugen eines Auslösesignals für einen Gleichstromleistungsschalter, der zwischen eine Hochspannungsgleichstromquelle und eine Hochspannungsgleichstromübertragungsleitung geschaltet ist gemäß Anspruch 1.

Weiterhin betrifft die Erfindung eine Anordnung zum Erzeugen des Auslösesignals gemäß Anspruch 2. Vorteilhafte Ausführungsformen sind in den abhängigen Ansprüchen definiert.

Zur Übertragung von elektrischer Energie über weite Strecken ist die Hochspannungsgleichstromübertragung (HGÜ) besonders gut geeignet, da dabei vergleichsweise geringe elektrische Verluste auftreten. Ein einfaches Hochspannungsgleichstromübertragungssystem (HGÜ-System) weist zwei Hochspannungsgleichstromübertragungsstationen (HGÜ-Stationen) auf, welche mittels einer Hochspannungsgleichstromübertragungsleitung (HGÜ-Leitung) elektrisch verbunden sind. Komplexer sind sogenannte Multi-Terminal-HGÜ-Systeme (HGÜ-Netze). Multi-Terminal-HGÜ-Systeme weisen mehr als zwei HGÜ-Stationen auf, welche untereinander über eine Mehrzahl von HGÜ-Leitungen elektrisch verbunden sind. Solche HGÜ-Netze weisen im Allgemeinen Hochspannungsgleichstromknoten auf, an denen drei oder mehr HGÜ-Leitungen elektrisch miteinander verbunden sind.

Wenn während der Energieübertragung an einer HGÜ-Leitung ein elektrischer Fehler auftritt (beispielsweise ein Kurzschluss, der zur Ausbildung eines Lichtbogens führt), dann muss dieser Fehler zuverlässig erkannt werden, damit daraufhin geeignete Schutzmaßnahmen ergriffen werden können. Sowohl in einfachen HGÜ-Systemen als auch in Multi-Terminal-HGÜ-Systemen müssen solche Fehler an den HGÜ-Leitungen erkannt und entsprechend geklärt werden. Dazu sind folgende Ansätze vorstellbar.

Ein erster bekannter Ansatz besteht darin, nach Erkennen eines Fehlers einen Wechselstrom-Leistungsschalter in einem an das HGÜ-System angeschlossenen Wechselstromnetz zu öffnen und damit die Energiezufuhr zu dem HGÜ-System zu unterbrechen. Dieses Schutzkonzept hat den Nachteil, dass das gesamte HGÜ-System zur Fehlerklärung abgeschaltet werden muss und erneute Startvorgänge der HGÜ-Stationen notwendig sind. Wenn die HGÜ-Stationen modulare Multilevelstromrichter aufweisen, dann müssen die Energiespeicher der Module neu aufgeladen werden, was die Wiederaufnahme der Energieübertragung nach der Fehlerklärung signifikant verzögert.

Der Einsatz eines Leitungsdifferentialschutzes könnte eine weitere Möglichkeit zur selektiven Fehlerklärung sein. Dabei werden an den Enden einer HGÜ-Leitung die fließenden Ströme gemessen und miteinander verglichen. Sobald die Differenz zwischen den beiden gemessenen Gleichströmen einen Schwellwert überschreitet, wird die Leitung abgeschaltet. Allerdings erfordert dieses Konzept den Einsatz einer schnellen Kommunikationsinfrastruktur, wobei die Signallaufzeiten des Kommunikationsmediums ebenfalls die Fehlererkennung verzögern.

Diese beschriebenen Ansätze benötigen also entweder zusätzliche aufwendige Komponenten oder ermöglichen keine selektive Klärung von Fehlern an der HGÜ-Leitung. Diese Nachteile kommen insbesondere bei Multi-Terminal-HGÜ-Systemen mit modularen Multilevel-Stromrichtern zu Tragen.

Aus der internationalen Patentanmeldung WO 2011/157305 A1 ist bekannt, zwischen einem DC-Bus einer HGÜ-Station und einer HGÜ-Leitung einen Gleichstromleistungsschalter anzuordnen. Der Gleichstromleistungsschalter wird von einer Schutzeinheit ausgelöst, die an der HGÜ-Leitung gemessene Spannungswerte und Stromwerte mit vorbestimmten Werten vergleicht.

Die Schrift GB 2 537 850 A offenbart eine Überwachungseinrichtung, die bei einer HGÜ-Station den Pol identifiziert, an dem ein Fehler aufgetreten ist. Dazu überwacht die Überwachungseinrichtung die Richtung des Stroms in einem Rückleiter, Spannungsprofile am Ausgang eines im Blockiermodus befindlichen Konverters, die zeitliche Änderung des Stroms am Ausgang des Konverters und/oder die Höhe des Stroms am Ausgang des Konverters.

Der Erfindung liegt die Aufgabe zugrunde, ein Verfahren und eine Anordnung anzugeben, mit denen einfach und schnell bei Vorliegen eines Fehlers ein Auslösesignal (Öffnungssignal) für einen Leistungsschalter erzeugt werden kann, mit welchem im Fehlerfall die Energieübertragung zum Fehlerort reduziert werden kann.

Diese Aufgabe wird erfindungsgemäß gelöst durch ein Verfahren und eine Anordnung nach den unabhängigen Patentansprüchen. Vorteilhafte Ausführungsformen der Anordnung sind in den abhängigen Patentansprüchen angegeben.

Offenbart wird ein Verfahren zum Erzeugen eines Auslösesignals für einen Gleichstromleistungsschalter, der zwischen eine Hochspannungsgleichstromquelle und eine Hochspannungsgleichstromübertragungsleitung (eines Hochspannungsgleichstromübertragungsnetzes) geschaltet ist, wobei bei dem Verfahren
- eine an einem (einzigen) Spannungsmessort an der Hochspannungsgleichstromübertragungsleitung anliegende Spannung unter Gewinnung von Spannungsmesswerten gemessen wird,
- ein an einem (einzigen) Strommessort durch die Hochspannungsgleichstromübertragungsleitung fließender Strom unter Gewinnung von Strommesswerten gemessen wird, und
- durch Auswertung (ausschließlich) der Spannungsmesswerte und/oder der Strommesswerte ein an (einem Fehlerort) der Hochspannungsgleichstromübertragungsleitung vorliegender Fehler (, insbesondere ein an der Hochspannungsgleichstromübertragungsleitung vorliegender Kurzschluss und/oder Lichtbogen,) erkannt wird und daraufhin ein Auslösesignal für den Gleichstromleistungsschalter erzeugt wird. Bei diesem Verfahren ist besonders vorteilhaft, dass lediglich durch Auswertung von Spannungsmesswerten und Strommesswerten der Fehler erkannt werden kann und daraufhin das Auslösesignal erzeugt werden kann. Aufgrund des Auslösesignals wird der Gleichstromleistungsschalter geöffnet, wodurch der Stromfluss von der Hochspannungsgleichstromquelle in die Hochspannungsgleichstromübertragungsleitung unterbrochen wird. Dadurch wird der in der Hochspannungsgleichstromübertragungsleitung fließende Fehlerstrom verringert oder völlig abgeschaltet. Da lediglich die an dem Spannungsmessort gemessenen Spannungsmesswerte und die an dem Strommessort gemessenen Strommesswerte ausgewertet werden müssen, ergibt sich ein sehr einfaches Verfahren zum Erzeugen des Auslösesignals. Auf das Auslösesignal hin wird also durch den Gleichstromleistungsschalter der Stromfluss zwischen der Hochspannungsgleichstromquelle und dem Fehlerort an der Hochspannungsgleichstromübertragungsleitung unterbrochen. Der zum Fehlerort (Fehlerstelle) fließende Strom wird abgeschaltet. Die Hochspannungsgleichstromquelle kann beispielsweise eine Hochspannungsgleichstromübertragungsstation (Stromrichter) oder ein Netzknoten (Hochspannungsgleichstromknoten, Hochspannungsgleichstromnetzknoten) eines Hochspannungsgleichstromübertragungsnetzes bzw. -systems sein.

Das Verfahren kann so ablaufen, dass das Auslösesignal für den Gleichstromleistungsschalter erzeugt wird,
- wenn (insbesondere innerhalb einer vorbestimmten dritten Zeitspanne) der Betrag der gemittelten zeitlichen Änderung der Spannungsmesswerte einen vorbestimmten ersten Spannungsänderungsschwellwert überschreitet, wobei (insbesondere im Wesentlichen gleichzeitig) die gemittelte zeitliche Änderung der Spannungsmesswerte kleiner Null ist. Dadurch wird eine Erkennung eines schnellen Spannungseinbruchs realisiert.

Begriffe wie "erste Zeitspanne", "zweite Zeitspanne", "dritte Zeitspanne" usw. sind dabei lediglich als Bezeichner für verschiedene Zeitspannen zu verstehen. Diese verschiedenen Zeitspannen können unterschiedlich lang oder auch gleich lang sein. Beispielsweise soll die Verwendung des Begriffs "dritte Zeitspanne" nicht bedeuten, dass bei dem Verfahren oder der Anordnung notwendigerweise auch eine "erste Zeitspanne" und eine "zweite Zeitspanne" angewendet werden. Die "erste Zeitspanne" und die "zweite Zeitspanne" können beispielsweise bei optionalen Verfahrensschritten oder bei Varianten des Verfahrens oder der Anordnung verwendet werden.

Das Verfahren kann auch so ablaufen, dass das Auslösesignal für den Gleichstromleistungsschalter erzeugt wird,
- wenn (insbesondere innerhalb einer vorbestimmten vierten Zeitspanne) der Betrag der gemittelten zeitlichen Änderung der Spannungsmesswerte einen vorbestimmten ersten Spannungsänderungsschwellwert überschreitet, wobei die gemittelte zeitliche Änderung der Spannungsmesswerte kleiner Null ist und (im Wesentlichen gleichzeitig, d.h. innerhalb der vorbestimmten vierten Zeitspanne) die gemittelte zeitliche Änderung der Strommesswerte einen vorbestimmten ersten Stromänderungsschwellwert überschreitet, oder
- wenn (insbesondere innerhalb der vorbestimmten vierten Zeitspanne) der Betrag der gemittelten zeitlichen Änderung der Spannungsmesswerte einen vorbestimmten ersten Spannungsänderungsschwellwert überschreitet, wobei die gemittelte zeitliche Änderung der Spannungsmesswerte kleiner Null ist und (im Wesentlichen gleichzeitig, d.h. innerhalb der vorbestimmten vierten Zeitspanne) die Strommesswerte einen vorbestimmten fünften Stromschwellwert überschreiten.
Bei der ersten Alternative wird dadurch die Erkennung eines schnellen Spannungseinbruchs in Verbindung mit einem schnellen Stromanstieg realisiert. Bei der zweiten Alternative wird dadurch die Erkennung eines schnellen Spannungseinbruchs in Verbindung mit einem Stromanstieg realisiert.

Das Verfahrenläuft so ab, dass das Auslösesignal für den Gleichstromleistungsschalter erzeugt wird,
- wenn innerhalb einer vorbestimmten ersten Zeitspanne die Spannungsmesswerte einen vorbestimmten ersten Spannungsschwellwert unterschreiten und die Strommesswerte einen vorbestimmten ersten Stromschwellwert überschreiten. Nicht beansprucht ist die Alternative, dass das Auslösesignal für den Gleichstromleistungsschalter erzeugt wird,
   - wenn innerhalb einer vorbestimmten zweiten Zeitspanne die Spannungsmesswerte einen vorbestimmten zweiten Spannungsschwellwert unterschreiten und die Strommesswerte ihr Vorzeichen ändern (weil der gemessene (Gleich-)Strom eine Stromrichtungsumkehr aufweist), oder
   - wenn innerhalb der vorbestimmten zweiten Zeitspanne die Spannungsmesswerte den vorbestimmten zweiten Spannungsschwellwert unterschreiten, die Strommesswerte ihr Vorzeichen ändern (weil der gemessene (Gleich-)Strom eine Stromrichtungsumkehr aufweist) und der Betrag der zeitlichen Änderung der Strommesswerte einen vorbestimmten ersten Stromänderungsschwellwert überschreitet.

Bei diesem Verfahren sind in einer Oder-Verknüpfung drei unterschiedliche Charakteristiken bzw. Kriterien der Spannungsmesswerte und/oder der Strommesswerte angegeben. Sobald eine der drei Charakteristiken erkannt wird bzw. eines der drei Kriterien erfüllt ist, wird das Auslösesignal erzeugt. Dieses Verfahren ist besonders sicher, weil mehrere Charakteristiken/Kriterien geprüft werden, um einen Fehler an der Hochspannungsgleichstromübertragungsleitung zu erkennen.

Damit ergibt sich ein Verfahren zum Erzeugen eines Auslösesignals für einen (insbesondere leistungselektronischen) Gleichstromleistungsschalter, der zwischen eine Hochspannungsgleichstromquelle und eine Hochspannungsgleichstromübertragungsleitung (eines Hochspannungsgleichstromübertragungsnetzes) geschaltet ist, wobei bei dem Verfahren
- eine an einem (einzigen) Spannungsmessort an der Hochspannungsgleichstromübertragungsleitung anliegende Spannung unter Gewinnung von Spannungsmesswerten gemessen wird,
- ein an einem (einzigen) Strommessort durch die Hochspannungsgleichstromübertragungsleitung fließender Strom unter Gewinnung von Strommesswerten gemessen wird, und
- ein Auslösesignal für den Gleichstromleistungsschalter erzeugt wird,
   - wenn innerhalb einer vorbestimmten ersten Zeitspanne die Spannungsmesswerte einen vorbestimmten ersten Spannungsschwellwert unterschreiten und die Strommesswerte einen vorbestimmten ersten Stromschwellwert überschreiten, oder
   - wenn innerhalb einer vorbestimmten zweiten Zeitspanne die Spannungsmesswerte einen vorbestimmten zweiten Spannungsschwellwert unterschreiten und die Strommesswerte ihr Vorzeichen ändern (weil der gemessene (Gleich-)Strom eine Stromrichtungsumkehr aufweist), oder
   - wenn innerhalb der vorbestimmten zweiten Zeitspanne die Spannungsmesswerte den vorbestimmten zweiten Spannungsschwellwert unterschreiten, die Strommesswerte ihr Vorzeichen ändern (weil der gemessene (Gleich-)Strom eine Stromrichtungsumkehr aufweist) und der Betrag der zeitlichen Änderung der Strommesswerte einen vorbestimmten ersten Stromänderungsschwellwert überschreitet.

Das Verfahren läuft so ab, dass das Auslösesignal für den Gleichstromleistungsschalter erzeugt wird, wenn die Strommesswerte einen vorbestimmten zweiten Stromschwellwert überschreiten. Dieses alternative Kriterium/Charakteristik ist als eine zusätzliche Überstromerkennung ausgebildet. Vorteilhafterweise kann der zweite Stromschwellwert so gewählt werden, dass er dem Bemessungsausschaltstrom des Gleichstromleistungsschalters entspricht. Dadurch wird ein Schutz des Gleichstromleistungsschalters auch dann sichergestellt, wenn die vorstehend genannten (komplizierteren) Kriterien nicht erfüllt sind und daher anhand dieser komplizierteren Kriterien kein Auslösesignal erzeugt wird. Diese Variante des Verfahrens kann also einen Schutz des Gleichstromleistungsschalters (vor Zerstörung durch Überstrom) realisieren.

Das Verfahren läuft so ab, dass der erste Stromschwellwert kleiner ist als der zweite Stromschwellwert. Wenn der erste Stromschwellwert kleiner ist als der zweite Stromschwellwert, so hat das vorteilhafterweise zur Folge, dass durch Auswertung des ersten Stromschwellwerts schneller das Auslösesignal bei Auftreten eines Fehlers erzeugt werden kann als durch Auswertung des zweiten Stromschwellwerts. Mit anderen Worten gesagt, kann der Gleichstromleistungsschalter schon bei einem geringeren Fehlerstrom ausgeschaltet werden. Dadurch ergibt sich ein besonders schnelles und sicheres Verfahren.

Vorteilhafterweise kann bei dem Verfahren der Gleichstromleistungsschalter ein leistungselektronischer Gleichstromleistungsschalter oder ein Hybrid-Gleichstromleistungsschalter sein. Grundsätzlich können aber auch andere Gleichstromleistungsschalter verwendet werden.

Das Verfahren kann auch so realisiert sein, dass die Hochspannungsgleichstromquelle (insbesondere die Hochspannungsgleichstromübertragungsstation) einen modularen Multilevelstromrichter aufweist, welcher eine Vielzahl von gleichartigen Modulen aufweist.

Das Verfahren kann auch so ablaufen, dass jedes Modul mindestens zwei elektronische Schaltelemente und einen elektrischen Energiespeicher (in einer Halbbrückenschaltung) aufweist. Solche Module werden auch als Halbbrücken-Module bezeichnet. Bei Hochspannungsgleichstromübertragungsstationen mit modularen Multilevelstromrichtern in Halbbrückentechnik (d.h. mit Halbbrücken-Modulen) lässt sich das Verfahren besonders vorteilhaft anwenden, weil diese Multilevelstromrichter aufgrund der Halbbrücken-Module keine Gegenspannung zu einem Fehlerstrom aufbauen können (im Unterschied zu Multilevelstromrichtern, welche Vollbrücken-Module aufweisen).

Das Verfahren kann aber auch bei Hochspannungsgleichstromübertragungsstationen mit modularen Multilevelstromrichtern in Vollbrückentechnik eingesetzt werden.

Das Verfahren kann auch so ablaufen, dass die Hochspannungsgleichstromquelle (insbesondere die Hochspannungsgleichstromübertragungsstation) zwei modulare Multilevelstromrichter aufweist, deren Gleichstromanschlüsse (Gleichspannungsanschlüsse) elektrisch in Reihe geschaltet sind (und bei denen der Verbindungspunkt der Gleichstromanschlüsse einen Masseanschluss bildet). Eine Hochspannungsgleichstromübertragung mit derartigen Hochspannungsgleichstromübertragungsstationen wird auch als bipolare Hochspannungsgleichstromübertragung bezeichnet, weil die Hochspannungsgleichstromübertragungsstation außer dem Masseanschluss zwei weitere Gleichstromanschlüsse aufweist. Ein Gleichstromanschluss hat dabei in der Regel ein höheres Potential als der Masseanschluss und der andere Gleichstromanschluss hat in der Regel ein niedriges Potential als der Masseanschluss.

Das Verfahren kann auch so ablaufen, dass der erste Spannungsschwellwert kleiner ist als der zweite Spannungsschwellwert.

Bei dem Verfahren kann der Gleichstromleistungsschalter ein unidirektionaler Gleichstromleistungsschalter sein. Ein unidirektionaler Gleichstromleistungsschalter ist ein Gleichstromleistungsschalter, der den Stromfluss in lediglich einer Richtung abschalten kann (unidirektional abschaltender Gleichstromleistungsschalter). Der Stromfluss in die andere Richtung ist unabschaltbar, beispielsweise erfolgt dieser Stromfluss über eine antiparallele Diode. Ein leistungselektronischer Gleichstromleistungsschalter hat gegenüber einem mechanischen Leistungsschalter bzw. einem Hybrid-Leistungsschalter (also einem Leistungsschalter, der sowohl mechanische Schaltelemente als auch elektronische Schaltelemente aufweist) den Vorteil, dass der leistungselektronische Gleichstromleistungsschalter den Fehlerstrom sehr schnell abschalten kann. Ein unidirektionaler Gleichstromleistungsschalter lässt sich relativ einfach und kostengünstig realisieren, weil die aktiven leistungselektronischen Bauelemente lediglich für eine Stromrichtung vorgesehen zu sein brauchen. Die andere Stromrichtung kann mittels einer einfachen (ungesteuerten) Diode (oder einer Reihenschaltung aus mehreren Dioden) realisiert werden.

Das Verfahren kann auch so ablaufen, dass das Auslösesignal für den Gleichstromleistungsschalter nur dann erzeugt wird, wenn die jeweiligen Voraussetzungen (mindestens) eine vorbestimmte Zeitdauer lang vorliegen.

Offenbart wird weiterhin eine Anordnung
- mit einem Gleichstromleistungsschalter, der zwischen eine Hochspannungsgleichstromquelle und eine Hochspannungsgleichstromübertragungsleitung (eines Hochspannungsgleichstromübertragungsnetzes) geschaltet ist,
- mit einem Spannungssensor zum Messen einer an einem (einzigen) Spannungsmessort an der Hochspannungsgleichstromübertragungsleitung anliegenden Spannung unter Gewinnung von Spannungsmesswerten,
- mit einem Stromsensor zum Messen eines an einem (einzigen) Strommessort durch die Hochspannungsgleichstromübertragungsleitung fließenden Stroms unter Gewinnung von Strommesswerten, und
- mit einer Steuereinrichtung, welche dazu eingerichtet ist, durch Auswertung (ausschließlich) der Spannungsmesswerte und/oder der Strommesswerte einen an der Hochspannungsgleichstromübertragungsleitung vorliegenden Fehler (, insbesondere einen an der Hochspannungsgleichstromübertragungsleitung vorliegenden Kurzschluss und/oder Lichtbogen,) zu erkennen und daraufhin ein Auslösesignal für den Gleichstromleistungsschalter zu erzeugen.

Diese Anordnung kann so ausgestaltet sein, dass die Steuereinrichtung das Auslösesignal für den Gleichstromleistungsschalter erzeugt,
- wenn (insbesondere innerhalb einer vorbestimmten dritten Zeitspanne) der Betrag der gemittelten zeitlichen Änderung der Spannungsmesswerte einen vorbestimmten ersten Spannungsänderungsschwellwert überschreitet, wobei (im Wesentlichen gleichzeitig) die gemittelte zeitliche Änderung der Spannungsmesswerte kleiner Null ist. Dadurch wird eine Erkennung eines schnellen Spannungseinbruchs realisiert.

Diese Anordnung kann auch so ausgestaltet sein, dass die Steuereinrichtung das Auslösesignal für den Gleichstromleistungsschalter erzeugt
- wenn (insbesondere innerhalb einer vorbestimmten vierten Zeitspanne) der Betrag der gemittelten zeitlichen Änderung der Spannungsmesswerte einen vorbestimmten ersten Spannungsänderungsschwellwert überschreitet, wobei die gemittelte zeitliche Änderung der Spannungsmesswerte kleiner Null ist und (im Wesentlichen gleichzeitig, **d.h.** innerhalb der vorbestimmten vierten Zeitspanne) die gemittelte zeitliche Änderung der Strommesswerte einen vorbestimmten ersten Stromänderungsschwellwert überschreitet, oder
- wenn (insbesondere innerhalb der vorbestimmten vierten Zeitspanne) der Betrag der gemittelten zeitlichen Änderung der Spannungsmesswerte einen vorbestimmten ersten Spannungsänderungsschwellwert überschreitet, wobei die gemittelte zeitliche Änderung der Spannungsmesswerte kleiner Null ist und (im Wesentlichen gleichzeitig, d.h. innerhalb der vorbestimmten vierten Zeitspanne) die Strommesswerte einen vorbestimmten fünften Stromschwellwert überschreiten.
Bei der ersten Alternative wird dadurch die Erkennung eines schnellen Spannungseinbruchs in Verbindung mit einem schnellen Stromanstieg realisiert. Bei der zweiten Alternative wird dadurch die Erkennung eines schnellen Spannungseinbruchs in Verbindung mit einem Stromanstieg realisiert.

Diese Anordnung ist so ausgestaltet, dass
die Steuereinrichtung das Auslösesignal für den Gleichstromleistungsschalter erzeugt,
   - wenn innerhalb einer vorbestimmten ersten Zeitspanne die Spannungsmesswerte einen vorbestimmten ersten Spannungsschwellwert unterschreiten und die Strommesswerte einen vorbestimmten ersten Stromschwellwert überschreiten. Nicht beansprucht ist die Alternative, dass die Anordnung so ausgestaltet sein kann, dass
die Steuereinrichtung das Auslösesignal für den Gleichstromleistungsschalter erzeugt,
   - wenn innerhalb einer vorbestimmten zweiten Zeitspanne die Spannungsmesswerte einen vorbestimmten zweiten Spannungsschwellwert unterschreiten und die Strommesswerte ihr Vorzeichen ändern (weil der gemessene (Gleich-)Strom eine Stromrichtungsumkehr aufweist), oder
   - wenn innerhalb der vorbestimmten zweiten Zeitspanne die Spannungsmesswerte den vorbestimmten zweiten Spannungsschwellwert unterschreiten, die Strommesswerte ihr Vorzeichen ändern (weil der gemessene (Gleich-)Strom eine Stromrichtungsumkehr aufweist) und der Betrag der zeitlichen Änderung der Strommesswerte einen vorbestimmten ersten Stromänderungsschwellwert überschreitet.

Damit ergibt sich eine Anordnung
- mit einem (leistungselektronischen) Gleichstromleistungsschalter, der zwischen eine Hochspannungsgleichstromquelle und eine Hochspannungsgleichstromübertragungsleitung (eines Hochspannungsgleichstromübertragungsnetzes) geschaltet ist,
- mit einem Spannungssensor zum Messen einer an einem (einzigen) Spannungsmessort an der Hochspannungsgleichstromübertragungsleitung anliegenden Spannung unter Gewinnung von Spannungsmesswerten,
- mit einem Stromsensor zum Messen eines an einem (einzigen) Strommessort durch die Hochspannungsgleichstromübertragungsleitung fließenden Stroms unter Gewinnung von Strommesswerten, und
- mit einer Steuereinrichtung, welche dazu eingerichtet ist, ein Auslösesignal für den Gleichstromleistungsschalter zu erzeugen,
   - wenn innerhalb einer vorbestimmten ersten Zeitspanne die Spannungsmesswerte einen vorbestimmten ersten Spannungsschwellwert unterschreiten und die Strommesswerte einen vorbestimmten ersten Stromschwellwert überschreiten, oder
   - wenn innerhalb einer vorbestimmten zweiten Zeitspanne die Spannungsmesswerte einen vorbestimmten zweiten Spannungsschwellwert unterschreiten und die Strommesswerte ihr Vorzeichen ändern (weil der gemessene (Gleich-)Strom eine Stromrichtungsumkehr aufweist), oder
   - wenn innerhalb der vorbestimmten zweiten Zeitspanne die Spannungsmesswerte den vorbestimmten zweiten Spannungsschwellwert unterschreiten, die Strommesswerte ihr Vorzeichen ändern (weil der gemessene (Gleich-)Strom eine Stromrichtungsumkehr aufweist) und der Betrag der zeitlichen Änderung der Strommesswerte einen vorbestimmten ersten Stromänderungsschwellwert überschreitet.

Diese Anordnung ist so ausgestaltet, dass die Steuereinrichtung das Auslösesignal für den Gleichstromleistungsschalter erzeugt, wenn die Strommesswerte einen vorbestimmten zweiten Stromschwellwert überschreiten.

Diese Anordnung ist so ausgestaltet, dass der erste Stromschwellwert kleiner ist als der zweite Stromschwellwert.

Die Anordnung kann so ausgestaltet sein, dass der Gleichstromleistungsschalter ein leistungselektronischer Gleichstromleistungsschalter oder ein Hybrid-Gleichstromleistungsschalter ist.

Die Anordnung kann auch so ausgestaltet sein, dass der Gleichstromleistungsschalter ein unidirektionaler Gleichstromleistungsschalter ist. Ein unidirektionaler Gleichstromleistungsschalter ist ein Gleichstromleistungsschalter, der den Stromfluss in lediglich einer Richtung abschalten kann (unidirektional abschaltender Gleichstromleistungsschalter).

Die Anordnung kann so ausgestaltet sein, dass die Hochspannungsgleichstromquelle (insbesondere die Hochspannungsgleichstromübertragungsstation) einen modularen Multilevelstromrichter aufweist, welcher eine Vielzahl von gleichartigen Modulen aufweist.

Die Anordnung kann auch so ausgestaltet sein, dass jedes Modul mindestens zwei elektronische Schaltelemente und einen elektrischen Energiespeicher (in einer Halbbrückenschaltung) aufweist.

Die Anordnung kann so ausgestaltet sein, dass die Hochspannungsgleichstromquelle (insbesondere die Hochspannungsgleichstromübertragungsstation) zwei modulare Multilevelstromrichter aufweist, deren Gleichstromanschlüsse (Gleichspannungsanschlüsse) elektrisch in Reihe geschaltet sind (und bei denen der Verbindungspunkt der Gleichstromanschlüsse einen Masseanschluss bildet).

Die Anordnung kann so ausgestaltet sein, dass der erste Spannungsschwellwert kleiner ist als der zweite Spannungsschwellwert.

Die Anordnung kann
- eine Induktivität, insbesondere eine Drosselspule, zur Begrenzung der Stromänderungen des durch den Gleichstromleistungsschalter fließenden elektrischen Stroms aufweisen.

Die Anordnung kann
- eine Spannungsbegrenzungseinrichtung aufweisen, welche die Höhe der an der Hochspannungsgleichstromübertragungsleitung vorübergehend (transient) auftretenden elektrischen Spannung begrenzt.
Die Spannungsbegrenzungseinrichtung begrenzt insbesondere die Höhe der an dem Hochspannungsgleichstromübertragungskabel vorübergehend (transient) auftretenden elektrischen Spannung begrenzt, deren Polarität entgegengesetzt zu der Polarität der an dem Hochspannungsgleichstromübertragungskabel im Betrieb auftretenden stationären Betriebsspannung ist. Diese Spannungsbegrenzungseinrichtung verhindert vorteilhafterweise das Auftreten von unzulässig großen Spannungsspitzen entgegengesetzter Polarität zwischen dem Hochspannungsgleichstromübertragungskabel und einem Bezugspotential, insbesondere Erdpotential.

Die Anordnung kann so ausgestaltet sein, dass
- die Spannungsbegrenzungseinrichtung einen Strompfad aufweist, über den bei einem vorübergehenden Auftreten einer unzulässig großen Spannung ein Strom aus der Hochspannungsgleichstromübertragungsleitung (zu einem Bezugspotential hin) abfließt. Dadurch wird die Höhe dieser Spannung begrenzt.

Dabei kann der Strompfad die Hochspannungsgleichstromübertragungsleitung mit einem Bezugspotential, insbesondere mit Erdpotential, verbinden.

Die Anordnung kann so ausgestaltet sein, dass
- der Strompfad ein elektrisches Ventil, insbesondere eine Diode, und/oder einen Überspannungsableiter aufweist.

Das elektrische Ventil kann derart gepolt sein, dass die Spannungsbegrenzungseinrichtung die vorübergehend (transient) auftretende elektrische Spannung begrenzt, deren Polarität entgegengesetzt zu der Polarität der an der Hochspannungsgleichstromübertragungsleitung auftretenden stationären Betriebsspannung ist (wobei die Spannungsbegrenzungseinrichtung die stationäre Betriebsspannung unbeeinflusst lässt).

Dabei kann die Schwellenspannung des Überspannungsableiters die maximal auf der Hochspannungsgleichstromübertragungsleitung zulässige Spannung bestimmen.

Die Spannungsbegrenzungseinrichtung kann zwischen dem Gleichstromleistungsschalter und der Hochspannungsgleichstromübertragungsleitung angeordnet sein.

Die Drosselspule kann zwischen der Spannungsbegrenzungseinrichtung und der Hochspannungsgleichstromquelle angeordnet sein.

Die Anordnung kann so ausgestaltet sein, dass das Auslösesignal für den Gleichstromleistungsschalter nur dann erzeugt wird, wenn die jeweiligen Voraussetzungen (mindestens) eine vorbestimmte Zeitdauer lang vorliegen.

Die Anordnung kann so ausgestaltet sein, dass
- die Hochspannungsgleichstromübertragungsleitung ein kunststoffisoliertes Hochspannungsgleichstromübertragungskabel ist.

Das beschriebene Verfahren und die beschriebene Anordnung weisen gleiche bzw. gleichartige Vorteile auf.

Im Folgenden wird die Erfindung anhand von Ausführungsbeispielen näher erläutert. Gleiche Bezugszeichen verweisen dabei auf gleiche oder gleichwirkende Elemente. Dazu ist in
- Figur 1: ein Ausführungsbeispiel eines Multi-Terminal-HGÜ-Systems mit vier Hochspannungsgleichstromübertragungsstationen und vierzehn Gleichstromleistungsschaltern, in
- Figur 2: ein Ausschnitt aus dem Multi-Terminal-HGÜ-System der Figur 1, in
- Figur 3: ein Ausführungsbeispiel einer Hochspannungsgleichstromübertragungsstation, in
- Figur 4: ein Ausführungsbeispiel eines modularen Multilevelstromrichters, in
- Figur 5: ein Ausführungsbeispiel eines Moduls in Halbbrückentechnik, in
- Figur 6: ein Ausführungsbeispiel eines Gleichstromleistungsschalters, in
- Figur 7: ein Ausführungsbeispiel einer Logikschaltung zum Erzeugen eines ersten Auslösesignals, in
- Figur 8: ein nicht beanspruchtes Ausführungsbeispiel einer Logikschaltung zum Erzeugen eines zweiten Auslösesignals, in
- Figur 9: ein Ausführungsbeispiel einer Logikschaltung zum Erzeugen eines dritten Auslösesignals, in
- Figur 10: ein nicht beanspruchtes Ausführungsbeispiel einer Logikschaltung zum Erzeugen eines vierten Auslösesignals, in
- Figur 11: ein weiteres nicht beanspruchtes Ausführungsbeispiel einer Logikschaltung zum Erzeugen des vierten Auslösesignals, in
- Figur 12: ein weiteres nicht beanspruchtes Ausführungsbeispiel einer Logikschaltung zum Erzeugen des vierten Auslösesignals, in
- Figur 13: ein Ausführungsbeispiel einer Logikschaltung zum Erzeugen eines (Gesamt-)Auslösesignals aus dem ersten Auslösesignal, dem zweiten Auslösesignal, dem dritten Auslösesignal und dem vierten Auslösesignal und in
- Figur 14: eine beispielhafte zusammenfassende Darstellung der einzelnen Logikschaltungen dargestellt.

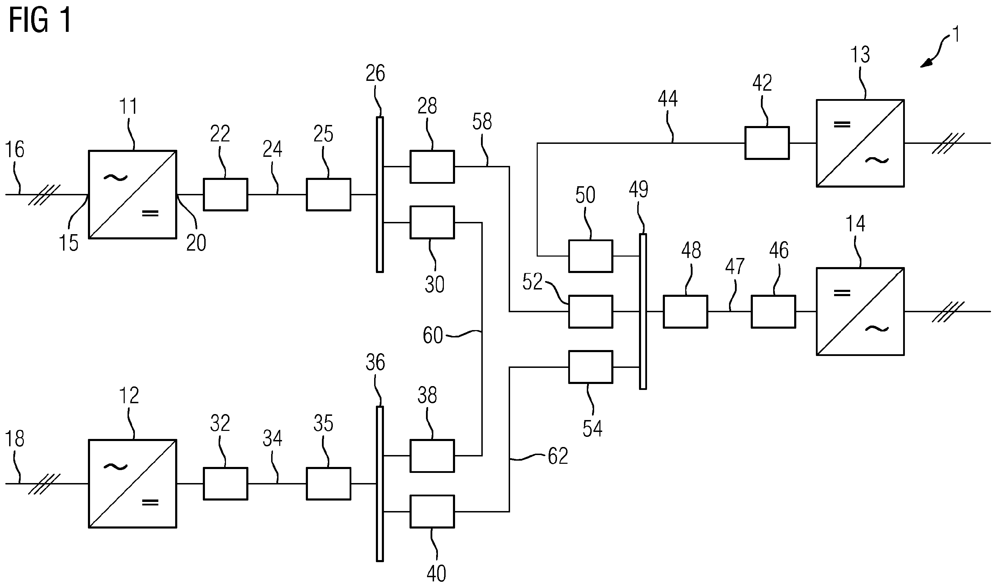

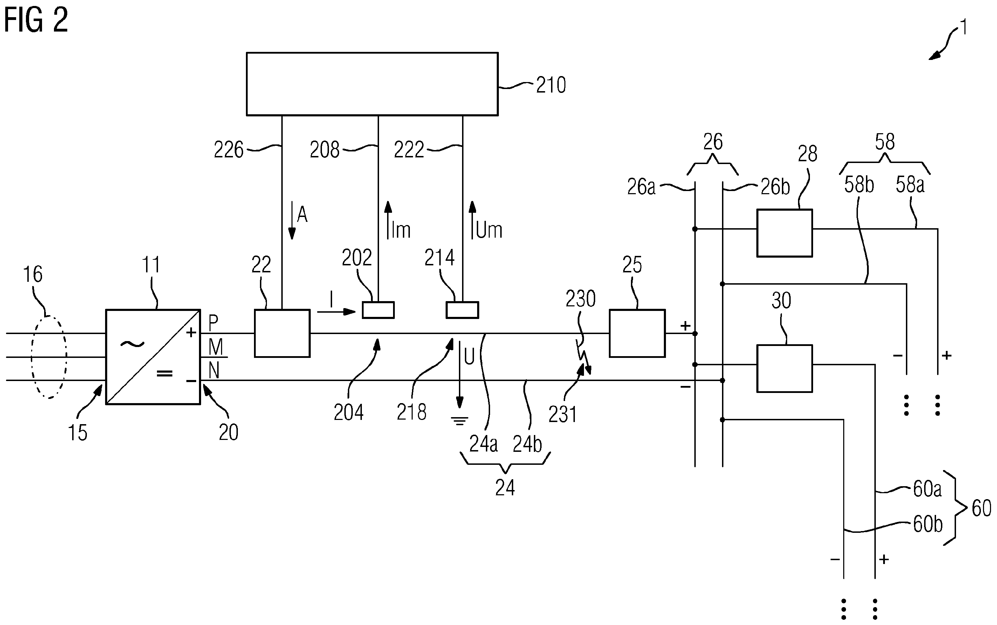

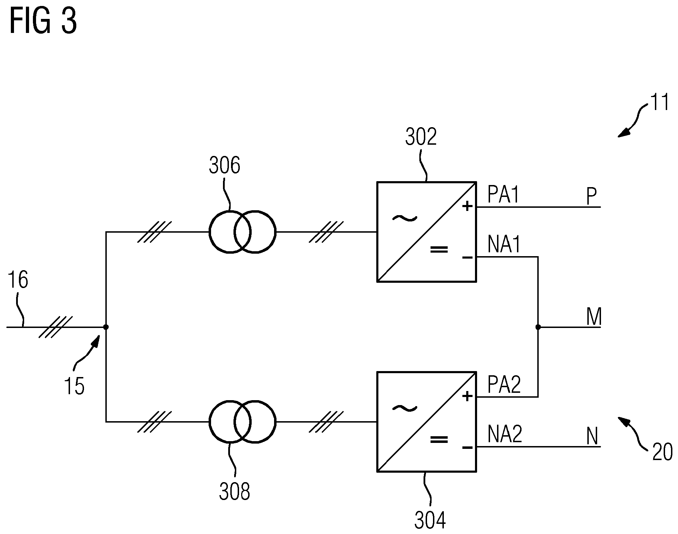

In Figur 1 ist ein Ausführungsbeispiel eines HGÜ-Systems 1 in Form eines Multi-Terminal-Hochspannungsgleichstromübertragungssystems 1 dargestellt. Hochspannungsgleichstromübertragung wird im Folgenden auch mit 'HGÜ' abgekürzt. Unter Hochspannung wird hier eine Spannung größer als 100 kV verstanden. Das Multi-Terminal-HGÜ-System 1 weist eine erste HGÜ-Station 11, eine zweite HGÜ-Station 12, eine dritte HGÜ-Station 13 und eine vierte HGÜ-Station 14 auf. Die HGÜ-Stationen 11, 12, 13 und 14 haben im Wesentlichen die Funktion eines Stromrichters, welcher Wechselstrom in Gleichstrom und/oder Gleichstrom in Wechselstrom umwandeln kann. Daher sind die HGÜ-Stationen in der Figur 1 jeweils als ein Stromrichter symbolisiert. Die HGÜ-Stationen können auch als HGÜ-Stromrichterstationen oder als HGÜ-Umrichterstationen bezeichnet werden. Die HGÜ-Stationen sind jeweils eine Hochspannungsgleichstromquelle. Ein Wechselstromanschluss 15 der ersten HGÜ-Station 11 ist über eine erste dreiphasige Wechselstromleitung 16 mit einem nicht dargestellten ersten Wechselstromnetz verbunden. Ebenso ist die zweite HGÜ-Station 12 über eine Wechselstromleitung 18 mit einem nicht dargestellten zweiten Wechselstromnetz verbunden. In gleicher Weise sind auch die dritte HGÜ-Station 13 und die vierte HGÜ-Station 14 jeweils über eine dreiphasige Wechselstromleitung mit einem nicht dargestellten Wechselstromnetz verbunden. Ein Gleichstromanschluss 20 der ersten HGÜ-Station 11 ist über einen ersten Gleichstromleistungsschalter 22 mit einer ersten HGÜ-Leitung 24 elektrisch verbunden. Die erste HGÜ-Leitung 24 (und auch alle anderen HGÜ-Leitungen) weist einen positiven Pol und einen negativen Pol auf (vgl. Figur 2). Die erste HGÜ-Leitung 24 ist über einen zweiten Gleichstromleistungsschalter 25 und eine erste Sammelschiene 26 mit einem dritten Gleichstromleistungsschalter 28 und mit einem vierten Gleichstromleistungsschalter 30 elektrisch verbunden. Die erste Sammelschiene 26 (und auch alle anderen Sammelschienen des HGÜ-Systems 1) weist zwei getrennte Stromschienen auf: eine Stromschiene 26a für den positiven Pol der HGÜ-Leitung und eine Stromschiene 26b für den negativen Pol der HGÜ-Leitung (vgl. Figur 3).

In ähnlicher Art und Weise ist ein Gleichstromanschluss der zweiten HGÜ-Station 12 über einen fünften Gleichstromleistungsschalter 32, eine zweite HGÜ-Leitung 34, einen sechsten Gleichstromleistungsschalter 35 und eine zweite Sammelschiene 36 mit einem siebenten Gleichstromleistungsschalter 38 und einem achten Gleichstromleistungsschalter 40 elektrisch verbunden. Weiterhin ist ein Gleichstromanschluss der dritten HGÜ-Station 13 über einen neunten Gleichstromleistungsschalter 42 mit einer dritten HGÜ-Leitung 44 elektrisch verbunden. Weiterhin ist ein Gleichstromanschluss der vierten HGÜ-Station 14 über einen zehnten Gleichstromleistungsschalter 46, eine vierte HGÜ-Leitung 47, einen elften Gleichstromleistungsschalter 48 und eine dritte Sammelschiene 49 mit einem zwölften Gleichstromleistungsschalter 50, einem dreizehnten Gleichstromleistungsschalter 52 und einem vierzehnten Gleichstromleistungsschalter 54 elektrisch verbunden.

Der dritte Gleichspannungsleistungsschalter 28 ist über eine fünfte HGÜ-Leitung 58 mit dem dreizehnten Gleichstromleistungsschalter 52 verbunden. Der vierte Gleichstromleistungsschalter 30 ist über eine sechste HGÜ-Leitung 60 mit dem siebenten Gleichstromleistungsschalter 38 verbunden. Der achte Gleichstromleistungsschalter 40 ist über eine siebente HGÜ-Leitung 62 mit dem vierzehnten Gleichstromleistungsschalter 54 elektrisch verbunden. Wenn die Gleichstromleistungsschalter unidirektionale Gleichstromleistungsschalter sind, dann können die Gleichstromleistungsschalter jeweils so orientiert sein, dass die an den HGÜ-Stationen bzw. an den Sammelschienen anliegenden Gleichstromleistungsschalter jeweils den von der jeweiligen HGÜ-Station bzw. von der jeweiligen Sammelschiene wegfließenden Strom abschalten können. Mit anderen Worten gesagt, können die Gleichstromleistungsschalter jeweils so orientiert sein, dass die an den Hochspannungsgleichstromquellen anliegenden Gleichstromleistungsschalter jeweils den von der jeweiligen Hochspannungsgleichstromquelle wegfließenden Strom abschalten können. Dies trifft zumindest auf den positiven Anschluss der HGÜ-Stationen bzw. Sammelschienen zu. Beim negativen Anschluss der HGÜ-Stationen bzw. Sammelschienen ist die Stromrichtung umgekehrt und folglich kann dort die Orientierung der Gleichstromleistungsschalter umgekehrt sein.

Da das HGÜ-System 1 vier Terminals in Form der vier HGÜ-Stationen 11, 12, 13 und 14 aufweist, wird dieses HGÜ-System auch als ein Multi-Terminal-HGÜ-System 1 bzw. als ein Multi-Terminal-HGÜ-Netz 1 bezeichnet.

In anderen Ausführungsbeispielen eines HGÜ-Systems können die Sammelschienen auch weggelassen sein und die an die Sammelschienen angeschlossenen Gleichstromleistungsschalter können unmittelbar mit den Gleichstromanschlüssen der jeweiligen HGÜ-Stationen verbunden sein.

In einem weiteren Ausführungsbeispiel eines HGÜ-Systems können die Gleichstromleistungsschalter 22, 25, 32, 35, 46 und 48 zwischen den HGÜ-Stationen 11, 12, 14 und den Sammelschienen 26, 36, 49 weggelassen sein. Dann sind die HGÜ-Stationen jeweils unmittelbar mit den Sammelschienen verbunden.

Die an den HGÜ-Leitungen auftretenden Gleichspannungen und Gleichströme können einer zeitlichen Veränderung unterliegen, insbesondere bei Auftreten eines Fehlers.

In Figur 2 ist ein Ausschnitt aus dem HGÜ-System 1 in detaillierterer Form dargestellt. So ist deutlich zu erkennen, dass der Gleichstromanschluss 20 der ersten HGÜ-Station 11 drei unterschiedliche Anschlüsse aufweist: einen positiven Anschluss P, einen negativen Anschluss N sowie einen Masseanschluss M (auch als Masseleiter M bezeichnet) . Der Masseanschluss M weist in der Regel Erdpotential auf. Dabei ist der positive Anschluss P über den ersten Gleichstromleistungsschalter 22 mit der ersten HGÜ-Leitung 24 elektrisch verbunden. Weiterhin ist in Figur 2 gut zu erkennen, dass die HGÜ-Leitungen jeweils einen positiven Pol 24a, 58a, 60a und einen negativen Pol 24b, 58b, 60b aufweisen; der positive Anschluss P ist über den ersten Gleichstromleistungsschalter 22 mit dem positiven Pol 24a der ersten HGÜ-Leitung 24 verbunden, der negative Anschluss N ist mit dem negativen Pol 24b der ersten HGÜ-Leitung 24 verbunden. Der negative Anschluss N kann über einen weiteren Gleichstromleistungsschalter mit dem negativen Pol 24b der ersten HGÜ-Leitung 24 verbunden sein; dieser weitere Gleichstromleistungsschalter ist aus Gründen der Übersichtlichkeit in der Figur 2 nicht dargestellt. Mittels eines Stromsensors 202 wird an einem Strommessort 204 (am positiven Pol 24a der ersten HGÜ-Leitung 24) der durch die erste HGÜ-Leitung 24 fließende Gleichstrom I unter Gewinnung von Strommesswerten Im gemessen. Diese Strommesswerte Im werden (über eine erste Datenleitung 208) zu einer Steuereinrichtung 210 übertragen. Mittels eines Spannungssensors 214 wird die an einem Spannungsmessort 218 an der ersten HGÜ-Leitung 24 anliegende Spannung U unter Gewinnung von Spannungsmesswerten Um gemessen. Diese Spannungsmesswerte Um werden (mittels einer zweiten Datenleitung 222) zu der Steuereinrichtung 210 übertragen. Die Spannungsmesswerte Um werden im Ausführungsbeispiel gegen Erdpotential gemessen.

Die Steuereinrichtung 210 wertet die Strommesswerte Im und die Spannungsmesswerte Um aus und erkennt aufgrund dieser Auswertung, wenn an der ersten HGÜ-Leitung 24 (oder an einer mit der ersten HGÜ-Leitung 24 verbundenen weiteren HGÜ-Leitung, wie beispielsweise an der fünften HGÜ-Leitung 58 oder an der sechsten HGÜ-Leitung 60) ein elektrischer Fehler 230 auftritt. Ein solcher elektrischer Fehler 230 wird auch als "Leitungsfehler", "Leitungsquerfehler" oder als "DC-Fehler" bezeichnet. Ein solcher elektrischer Fehler 230 kann insbesondere ein Kurzschluss 230 sein, wie beispielsweise ein Kurzschluss zwischen dem positiven Pol und dem negativen Pol der HGÜ-Leitung oder ein Kurzschluss zwischen einem der Pole der HGÜ-Leitung und Erdpotential. Ein solcher Fehler kann auch beispielsweise ein Kurzschluss 230 mit Ausbildung eines Lichtbogens sein. Der Fehler 230 tritt an einem Fehlerort 231 (Fehlerstelle 231) an der HGÜ-Leitung auf.

Wenn aufgrund der Auswertung der Spannungsmesswerte Um und der Strommesswerte Im das Vorliegen eines solchen Fehlers 230 an der ersten HGÜ-Leitung 24 (oder an einer der anderen HGÜ-Leitungen) erkannt wird, dann erzeugt die Steuereinrichtung 210 ein Auslösesignal A. Dieses Auslösesignal A wird (mittels einer dritten Datenleitung 226) zu dem ersten Gleichstromleistungsschalter 22 übertragen. Auf das Auslösesignal A hin löst der erste Gleichstromleistungsschalter 22 aus, d. h. der erste Gleichstromleistungsschalter 22 öffnet. Dadurch wird die erste HGÜ-Leitung 24 von der ersten HGÜ-Station 11 getrennt. Mit anderen Worten wird ein Stromfluss von der ersten HGÜ-Station 11 zu der ersten HGÜ-Leitung 24 unterbrochen. Genauer gesagt wird der Stromfluss von der ersten HGÜ-Station 11 zu dem positiven Pol 24a der ersten HGÜ-Leitung 24 unterbrochen. Dadurch wird die Energiezufuhr zum Fehlerort 231 an der ersten HGÜ-Leitung 24 unterbrochen, wodurch ein ggf. brennender Lichtbogen erlischt und/oder die erste HGÜ-Leitung 24 spannungsfrei geschaltet wird. Hierbei ist von Vorteil, dass mittels der entsprechenden Gleichstromleistungsschalter nur jeweils diejenige HGÜ-Leitung, an der der Fehler auftritt, von der energieeinspeisenden HGÜ-Station getrennt wird. Beispielsweise (vgl. Figur 1) kann es bei dem Fehler 230 an der ersten HGÜ-Leitung 24 ausreichend sein, wenn der erste Gleichstromleistungsschalter 22 die Energieeinspeisung der ersten HGÜ-Station 11 in die erste HGÜ-Leitung 24 unterbricht. Je nach Richtung des Energieflusses kann es auch notwendig sein, dass der zweite Gleichstromleistungsschalter 25 die Energiezufuhr zu der ersten HGÜ-Leitung 24 unterbricht. Andere nicht von dem Fehler 230 betroffene HGÜ-Leitungen des HGÜ-Systems 1 (wie beispielsweise die dritte HGÜ-Leitung 44, die zweite HGÜ-Leitung 34 oder die siebente HGÜ-Leitung 62) brauchen jedoch nicht spannungsfrei geschaltet zu werden, so dass die Energieübertragung in den nicht von dem Fehler 230 betroffenen Teilen des HGÜ-Netzes 1 weiter stattfinden kann. Es ist also ein großer Vorteil, dass mittels der jeweiligen Gleichstromleistungsschalter selektiv Netzabschnitte des HGÜ-Netzes 1 abgeschaltet (d. h. spannungsfrei geschaltet) werden können.

Die übrigen Gleichstromleistungsschalter des HGÜ-Netzes 1 (d.h. der zweite Gleichstromleistungsschalter 25 bis zum vierzehnten Gleichstromleistungsschalter 54) sind ebenfalls mit einer Steuereinrichtung und mit jeweils einem Stromsensor und jeweils einem Spannungssensor elektrisch verbunden. Dabei kann jedem Gleichstromleistungsschalter eine eigene Steuereinrichtung zugeordnet sein oder mehreren Gleichstromleistungsschaltern (im Extremfall allen Gleichstromleistungsschaltern) kann eine gemeinsame Steuereinrichtung zugeordnet sein. Im letztgenannten Fall empfangen die Gleichstromleistungsschalter von der gemeinsamen Steuereinrichtung jeweils (selektiv) ein individuelles Auslösesignal **A.** Aus Gründen der Übersichtlichkeit sind in Figur 2 die Steuereinrichtung, der Stromsensor und der Spannungssensor nur im Zusammenhang mit dem ersten Gleichstromleistungsschalter 22 figürlich dargestellt.

In Figur 3 ist ein Ausführungsbeispiel der ersten HGÜ-Station 11 dargestellt. Die zweite HGÜ-Station 12, die dritte HGÜ-Station 13 und die vierte HGÜ-Station 14 können ebenso aufgebaut sein wie die erste HGÜ-Station 11.

Die erste HGÜ-Station 11 weist einen ersten Stromrichter 302 und einen zweiten Stromrichter 304 auf. Der erste Stromrichter 302 bildet dabei einen ersten Teil-Stromrichter 302 der HGÜ-Station 11; der zweite Stromrichter 304 bildet einen zweiten Teil-Stromrichter 304 der ersten HGÜ-Station 11. Ein Wechselstromanschluss des ersten Stromrichters 302 ist über einen ersten (Wechselstrom-)Transformator 306 mit dem Wechselstromanschluss 15 der ersten HGÜ-Station 11 elektrisch verbunden. Ein Wechselstromanschluss des zweiten Stromrichters 304 ist über einen zweiten (Wechselstrom-) Transformator 308 mit dem Wechselstromanschluss 15 der ersten HGÜ-Station 11 elektrisch verbunden. Ein positiver Gleichstromanschluss PA1 des ersten Stromrichters 302 bildet den positiven Anschluss P der ersten HGÜ-Station 11. Ein negativer Gleichstromanschluss NA1 des ersten Stromrichters 302 ist elektrisch verbunden mit einem positiven Gleichstromanschluss PA2 des zweiten Stromrichters 304. Diese elektrische Verbindung bildet den Masseanschluss M der ersten HGÜ-Station 11. Ein negativer Gleichstromanschluss NA2 des zweiten Stromrichters 304 bildet den negativen Anschluss N der ersten HGÜ-Station 11.

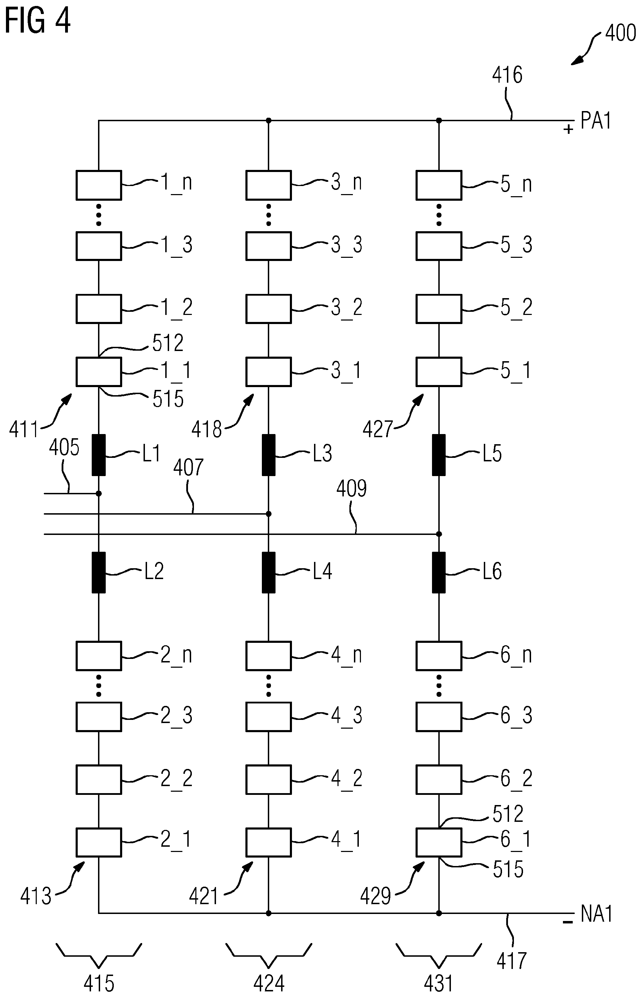

In Figur 4 ist ein Ausführungsbeispiel eines Stromrichters 400 dargestellt. Dabei kann es sich beispielsweise um den in Figur 3 dargestellten ersten Stromrichter 302 und/oder den zweiten Stromrichter 304 handeln. Es ist auch möglich, dass eine oder mehrere der HGÜ-Stationen lediglich einen Stromrichter aufweist, beispielsweise einen Stromrichter in der in Figur 4 dargestellten Form.

Der Stromrichter 400 ist ein modularer Multilevelstromrichters 400 (modular multilevel converter, MMC). Dieser Stromrichter 400 weist einen ersten Wechselstromanschluss 405, einen zweiten Wechselstromanschluss 407 und einen dritten Wechselstromanschluss 409 auf. Der erste Wechselstromanschluss 405 ist elektrisch mit einem ersten Phasenmodulzweig 411 und einem zweiten Phasenmodulzweig 413 verbunden. Der erste Phasenmodulzweig 411 und der zweite Phasenmodulzweig 413 bilden ein erstes Phasenmodul 415 des Stromrichters 400. Das dem ersten Wechselstromanschluss 405 abgewandte Ende des ersten Phasenmodulzweigs 411 ist mit einem ersten Gleichstromanschluss 416 elektrisch verbunden; das dem ersten Wechselstromanschluss 405 abgewandte Ende des zweiten Phasenmodulzweigs 413 ist mit einem zweiten Gleichstromanschluss 417 elektrisch verbunden. Der erste Gleichstromanschluss 416 ist ein positiver Gleichstromanschluss; der zweite Gleichstromanschluss 417 ist ein negativer Gleichstromanschluss. Der erste Gleichstromanschluss 416 kann beispielsweise der positive Gleichstromanschluss PA1 gemäß Figur 3 sein und der zweite Gleichstromanschluss 417 kann der negative Gleichstromanschluss NA1 sein.

Der zweite Wechselstromanschluss 407 ist mit einem Ende eines dritten Phasenmodulzweigs 418 und mit einem Ende eines vierten Phasenmodulzweigs 421 elektrisch verbunden. Der dritte Phasenmodulzweig 418 und der vierte Phasenmodulzweig 421 bilden ein zweites Phasenmodul 424. Der dritte Wechselstromanschluss 409 ist mit einem Ende eines fünften Phasenmodulzweigs 427 und mit einem Ende eines sechsten Phasenmodulzweigs 429 elektrisch verbunden. Der fünfte Phasenmodulzweig 427 und der sechste Phasenmodulzweig 429 bilden ein drittes Phasenmodul 431.

Das dem zweiten Wechselstromanschluss 407 abgewandte Ende des dritten Phasenmodulzweigs 418 und das dem dritten Wechselstromanschluss 409 abgewandte Ende des fünften Phasenmodulzweigs 427 sind mit dem ersten Gleichstromanschluss 416 elektrisch verbunden. Das dem zweiten Wechselstromanschluss 407 abgewandte Ende des vierten Phasenmodulzweigs 421 und das dem dritten Wechselstromanschluss 409 abgewandte Ende des sechsten Phasenmodulzweigs 429 sind mit dem zweiten Gleichstromanschluss 417 elektrisch verbunden.

Jeder Phasenmodulzweig weist eine Mehrzahl von Modulen (1_1, 1_2, 1_3 ... 1_n; 2_1 ... 2_n; usw.) auf, welche elektrisch in Reihe geschaltet sind. Solche Module werden auch als Submodule bezeichnet. Im Ausführungsbeispiel der Figur 1 weist jeder Phasenmodulzweig n Module auf. Die Anzahl der elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein. Im Ausführungsbeispiel ist n = 36: der erste Phasenmodulzweig 411 weist also 36 Module 1_1, 1_2, 1_3, ... 1_36 auf. Die anderen Phasenmodulzweige 413, 418, 421, 427 und 429 sind gleichartig aufgebaut. Außerdem weist jeder Phasenmodulzweig eine Induktivität Lx (Induktivität L1 ... L6, Spule L1 ... L6) auf. So weist der erste Phasenmodulzweig 411 eine erste Induktivität L1 auf. Der zweite Phasenmodulzweig 413 weist eine zweite Induktivität L2 auf usw..

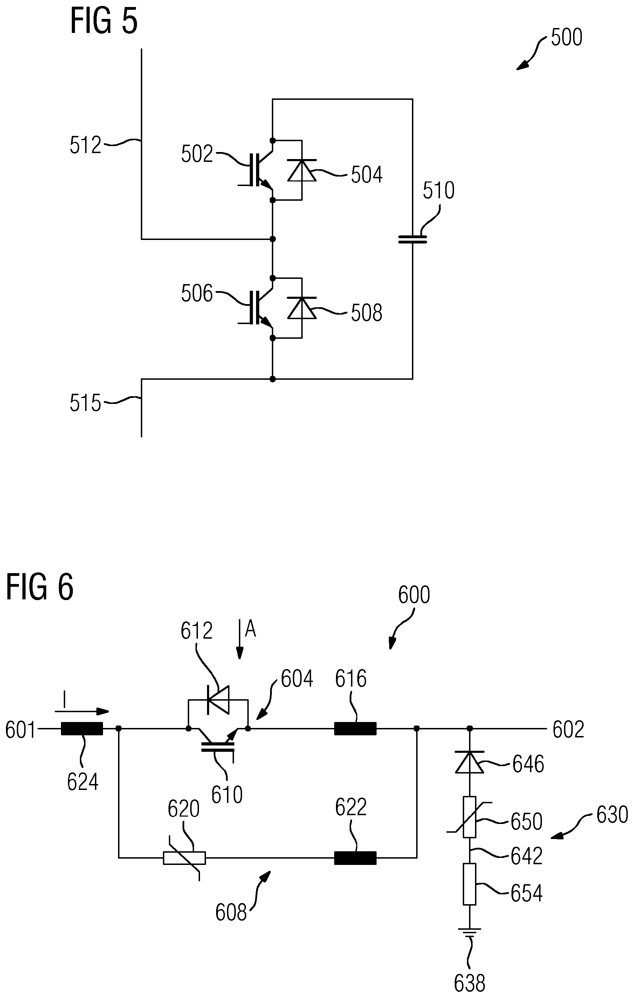

In Figur 5 ist ein Ausführungsbeispiel eines Moduls 500 dargestellt. Dabei kann es sich beispielsweise um eines der Module 1_1 bis 6_n des in Figur 4 dargestellten Stromrichters 400 handeln.

Das Modul 500 ist als ein Halbbrückenmodul 500 ausgestaltet. Das Modul 500 weist ein erstes (abschaltbares) elektronisches Schaltelement 502 (erstes abschaltbares Halbleiterventil 502) mit einer ersten antiparallel geschalteten Diode 504 auf. Weiterhin weist das Modul 500 ein zweites (abschaltbares) elektronisches Schaltelement 506 (zweites abschaltbares Halbleiterventil 506) mit einer zweiten antiparallel geschalteten Diode 508 sowie einen elektrischen Energiespeicher 510 in Form eines Kondensators 510 auf. Das erste elektronische Schaltelement 502 und das zweite elektronische Schaltelement 506 sind jeweils als ein IGBT (insulated-gate bipolar transistor) ausgestaltet. Das erste elektronische Schaltelement 502 ist elektrisch in Reihe geschaltet mit dem zweiten elektronischen Schaltelement 506. Am Verbindungspunkt zwischen den beiden elektronischen Schaltelementen 502 und 506 ist ein erster galvanischer Modulanschluss 512 angeordnet. An dem Anschluss des zweiten elektronischen Schaltelements 506, welcher dem Verbindungspunkt gegenüberliegt, ist ein zweiter galvanischer Modulanschluss 515 angeordnet. Der zweite Modulanschluss 515 ist weiterhin mit einem ersten Anschluss des Energiespeichers 510 elektrisch verbunden; ein zweiter Anschluss des Energiespeichers 510 ist elektrisch verbunden mit dem Anschluss des ersten elektronischen Schaltelements 502, der dem Verbindungspunkt gegenüberliegt.

Der Energiespeicher 510 ist also elektrisch parallel geschaltet zu der Reihenschaltung aus dem ersten elektronischen Schaltelement 502 und dem zweiten elektronischen Schaltelement 506. Durch entsprechende Ansteuerung des ersten elektronischen Schaltelements 502 und des zweiten elektronischen Schaltelements 506 durch eine (nicht dargestellte) elektronische Ansteuerschaltung kann erreicht werden, dass zwischen dem ersten Modulanschluss 512 und dem zweiten Modulanschluss 515 entweder die Spannung des Energiespeichers 510 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden.

In Figur 6 ist ein Ausführungsbeispiel eines Gleichstromleistungsschalters 600 dargestellt. Einer, mehrere oder alle der in den Figuren 1 und 2 dargestellten Gleichstromleistungsschalter können so aufgebaut sein wie der Gleichstromleistungsschalter 600 der Figur 6.

Der Gleichstromleistungsschalter 600 weist einen Eingang 601 und einen Ausgang 602 auf. Der Gleichstromleistungsschalter 600 schaltet den Strom zwischen dem Eingang 601 und dem Ausgang 602. Zwischen dem Eingang 601 und dem Ausgang 602 befinden sich zwei Strompfade, welche parallel zueinander geschaltet sind: ein Betriebsstrompfad 604 und ein Abschaltstrompfad 608. Der Betriebsstrompfad 604 weist einen elektronischen Schalter 610 auf. Bei dem elektronischen Schalter 610 kann es sich beispielsweise um einen IGBT (oder um eine Reihenschaltung von mehreren IGBTs) handeln. Antiparallel zu dem elektronischen Schalter 610 ist eine Diode 612 (Freilaufdiode 612) geschaltet.

Anstelle der Diode 612 kann auch eine Reihenschaltung aus mehreren Dioden verwendet werden. (Anstelle des IGBTs 610 mit antiparalleler Diode 612 kann auch ein rückwärts leitfähiger IGBT verwendet werden.) Zu der Parallelschaltung aus elektronischem Schalter 610 und Diode 612 ist in Reihe eine erste Induktivität 616 geschaltet. Der Abschaltstrompfad 608 weist eine Reihenschaltung aus einem Überspannungsableiter 620 und einer zweiten Induktivität 622 auf. Zwischen dem Eingang 601 und dem Verbindungspunkt von dem Betriebsstrompfad 604 und dem Abschaltstrompfad 608 ist eine dritte Induktivität 624 angeordnet.

Im eingeschalteten Zustand des Gleichstromleistungsschalters 600 fließt der Strom I (Gleichstrom I) vom Eingang 601 über den eingeschalteten elektronischen Schalter 610 zum Ausgang 602. Sobald der Gleichstromleistungsschalter 600 das Auslösesignal A erhält, wird der elektronische Schalter 610 geöffnet (hier: der IGBT wird ausgeschaltet). Daraufhin kommutiert der Strom I von dem Betriebsstrompfad 604 in den Abschaltstrompfad 608. Aufgrund des Stroms I im Abschaltstrompfad 608 entsteht am Überspannungsableiter 620 eine Gegenspannung, welche zur Folge hat, dass der Strom I verringert wird und schließlich auf Null abfällt. Dabei wird elektrische Energie im Überspannungsableiter 620 in Wärme umgewandelt und an die Umwelt abgegeben. Die erste Induktivität 616 und/oder die zweite Induktivität 622 brauchen nicht als real vorhandene Bauelemente in dem Gleichstromleistungsschalter 600 vorhanden zu sein. Diese Induktivitäten können beispielsweise durch Leitungsinduktivitäten oder Streuinduktivitäten innerhalb des Gleichstromleistungsschalters 600 entstehen. Die dritte Induktivität 624 kann als ein Bauelement in den Gleichstromleistungsschalter 600 eingebaut sein. Die dritte Induktivität 624 kann beispielsweise als eine Drosselspule 624 ausgestaltet sein. Alternativ kann die dritte Induktivität 624 auch außerhalb des Gleichstromleistungsschalters 600 angeordnet sein. Beispielsweise kann die dritte Induktivität 624 seriell vor dem Eingang 601 angeordnet sein. Die dritte Induktivität 624 begrenzt den Stromanstieg durch den elektronischen Schalter 610.

Der Gleichstromleistungsschalter 600 weist eine Spannungsbegrenzungseinrichtung 630 auf. Die Spannungsbegrenzungseinrichtung 630 verbindet den Ausgang 602 mit einem Bezugspotenzial 638. Das Bezugspotenzial 638 ist insbesondere das Erdpotenzial 638. Das Bezugspotential 638 kann zum Beispiel das elektrische Potential des Masseanschlusses M einer der HGÜ-Stationen sein. Die Spannungsbegrenzungseinrichtung 630 weist also einen Strompfad 642 auf, der den Ausgang 602 des Gleichstromleistungsschalters 600 mit dem Bezugspotenzial 638 elektrisch verbindet. Die Spannungsbegrenzungseinrichtung 630 kann auch außerhalb des Gleichstromleistungsschalters 600 angeordnet sein. Insbesondere kann die Spannungsbegrenzungseinrichtung 630 zwischen dem Gleichstromleistungsschalter 600 und der Hochspannungsgleichstromübertragungsleitung angeordnet sein. Der Strompfad verbindet die Hochspannungsgleichstromübertragungsleitung mit dem Bezugspotential. Die erste Induktivität 624 kann insbesondere zwischen der Spannungsbegrenzungseinrichtung 630 und der (mit dem Eingang 601 verbundenen) Hochspannungsgleichstromquelle angeordnet sein.

Der Strompfad 642 weist ein elektrisches Ventil 646 auf, insbesondere eine Diode 646. Weiterhin weist der Strompfad 642 einen Überspannungsableiter 650 und/oder einen Widerstand 654 auf. Im einfachsten Fall weist der Strompfad 642 nur das elektrische Ventil 646 auf. Alternativ kann der Strompfad 642 auch zusätzlich den Überspannungsableiter 650 aufweisen. Die Schwellenspannung des Überspannungsableiters bestimmt dann die maximal auf der Hochspannungsgleichstromübertragungsleitung zulässige Spannung entgegengesetzter Polarität. Der Widerstand 654 braucht nicht als reales elektrisches Bauelement in der Spannungsbegrenzungseinrichtung 630 vorhanden zu sein. Dieser Widerstand 654 kann beispielsweise den ohmschen Widerstand des Bezugspotenzials 638 symbolisieren, beispielsweise den ohmschen Widerstand der Erde **638.**

Die Spannungsbegrenzungseinrichtung 630 begrenzt die Höhe der an dem Ausgang 602 des Gleichstromleistungsschalters anliegenden elektrischen Spannung. Wenn dieser Ausgang 602 mit der Hochspannungsgleichstromübertragungsleitung verbunden ist, dann begrenzt die Spannungsbegrenzungseinrichtung 630 die Höhe der an der Hochspannungsgleichstromübertragungsleitung vorübergehend (transient) auftretenden elektrischen Spannung entgegengesetzter Polarität.

Die Spannungsbegrenzungseinrichtung begrenzt (nur) die Höhe der an der Hochspannungsgleichstromübertragungsleitung vorübergehend (transient) auftretenden elektrischen Spannung, deren Polarität entgegengesetzt zu der Polarität der an der Hochspannungsgleichstromübertragungsleitung im Betrieb auftretenden stationären Betriebsspannung **ist.** Dies wird durch das elektrische Ventil 646 erreicht. Das elektrische Ventil 646 ist derart gepolt, dass die Spannungsbegrenzungseinrichtung die vorübergehend auftretende elektrische Spannung begrenzt, deren Polarität entgegengesetzt zu der Polarität der an der Hochspannungsgleichstromübertragungsleitung auftretenden stationären Betriebsspannung **ist.** Die Spannungsbegrenzungseinrichtung lässt jedoch die stationäre Betriebsspannung unbeeinflusst.

Diese Spannungsbegrenzungseinrichtung 630 verhindert vorteilhafterweise das Auftreten von unzulässig großen Spannungsspitzen entgegengesetzter Polarität zwischen der Hochspannungsgleichstromübertragungsleitung und dem Bezugspotential, insbesondere Erdpotential. Die Spannungsbegrenzungseinrichtung 630 weist zu diesem Zweck den Strompfad 642 auf, über den bei einem vorübergehenden Auftreten einer unzulässig großen Spannung ein Strom aus der Hochspannungsgleichstromübertragungsleitung (zu dem Bezugspotential hin) abfließt. Dadurch wird die Höhe dieser unzulässigen Spannung begrenzt. Die Begrenzung der unzulässigen Spannungen entgegengesetzter Polarität ist vorteilhaft zum Schutz der Kunststoffisolierung von als kunststoffisolierte Hochspannungsgleichstromübertragungskabel ausgestalteten Hochspannungsgleichstromübertragungsleitungen.

Der dargestellte Gleichstromleistungsschalter 600 ist ein leistungselektronischer Gleichstromleistungsschalter 600 (SSCB, Solid State Circuit Breaker), insbesondere ein unidirektionaler leistungselektronischer Gleichstrom-leistungsschalter 600. Der Gleichstromleistungsschalter 600 kann nämlich lediglich einen Stromfluss in einer Richtung abschalten (nämlich den Stromfluss in Richtung vom Eingang 601 zum Ausgang 602). Es handelt sich also um einen unidirektional abschaltenden Gleichstromleistungsschalter 600. Anstelle dieses unidirektional abschaltenden Gleichstromleistungsschalters kann selbstverständlich auch ein bidirektional abschaltender Gleichstromleistungsschalter verwendet werden, also ein Gleichstromleistungsschalter, der in der Lage, den Stromfluss in beiden Richtungen abzuschalten. Anstelle des leistungselektronischen Gleichstromleistungsschalters 600 kann aber auch ein anderer Gleichstromleistungsschalter verwendet werden, beispielsweise ein mechanischer Gleichstromleistungsschalter oder ein Hybrid-Gleichstromleistungsschalter.

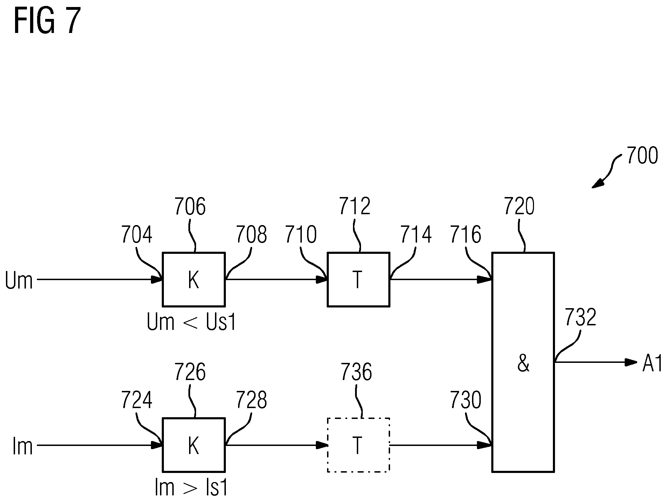

In Figur 7 ist ein Ausführungsbeispiel einer ersten Logikschaltung 700 dargestellt. Diese erste Logikschaltung 700 erzeugt mittels Auswertung der Spannungsmesswerte Um und der Strommesswerte Im ein erstes Auslösesignal A1. Die erste Logikschaltung 700 realisiert einen Überstromschutz mit Unterspannungserkennung.

Die Spannungsmesswerte Um gelangen zu einem Eingang 704 eines ersten Komparators 706. Der erste Komparator 706 vergleicht die Spannungsmesswerte Um mit einem ersten Spannungsschwellwert Us1 (erster Spannungsschwellenwert Us1). Sobald die Spannungsmesswerte Um unter den ersten Spannungsschwellwert Us1 absinken, wird an einem Ausgang 708 des ersten Komparators 706 ein logisches 1-Signal (auch als eine logische 1 oder als ein logisches high-Signal bezeichnet) ausgegeben. Der Ausgang 708 des ersten Komparators 706 ist mit einem Eingang 710 eines ersten Zeitglieds 712 verbunden. Ein Ausgang 714 des ersten Zeitglieds 712 ist mit einem ersten Eingang 716 eines ersten UND-Glieds 720 verbunden.

Das erste Zeitglied 712 kann verschiedene Funktionen aufweisen. Zum einen gibt das erste Zeitglied 712 an seinem Ausgang 714 nur dann ein logisches 1-Signal aus, wenn an seinem Eingang 710 mindestens für eine vorgegebene erste Zeitdauer ein logisches 1-Signal anliegt (Einschaltverzögerung). Weiterhin speichert das erste Zeitglied 712 das an seinem Ausgang 714 ausgegebene logische 1-Signal für eine vorgegebene zweite Zeitdauer (Ausschaltverzögerung). Das erste Zeitglied 712 kann eine Einschaltverzögerung und/oder eine Ausschaltverzögerung aufweisen. Dabei können die erste Zeitdauer und die zweite Zeitdauer gleich lang oder unterschiedlich lang sein. Das trifft auch auf alle anderen Zeitglieder zu.

Die Strommesswerte Im gelangen zu einem Eingang 724 eines zweiten Komparators 726. Dieser zweite Komparator 726 gibt an seinem Ausgang 728 ein logisches 1-Signal aus, sobald die Strommesswerte Im einen ersten Stromschwellwert Is1 (erster Stromschwellenwert Is1) überschreiten. Der Ausgang 728 des zweiten Komparators 726 ist mit einem zweiten Eingang 730 des ersten UND-Glieds 720 elektrisch verbunden. Sobald gleichzeitig an dem ersten Eingang 716 und an dem zweiten Eingang 730 des ersten UND-Glieds 720 ein logisches 1-Signal anliegt, gibt das erste UND-Glied 720 an seinem Ausgang 732 ein Signal in Form eines logischen 1-Signals aus. Dieses logische 1-Signal ist das erste Auslösesignal A1.

Optional kann zwischen dem Ausgang 728 des zweiten Komparators 726 und dem zweiten Eingang 730 des ersten UND-Gliedes 720 ein zweites Zeitglied 736 angeordnet sein. Das erste Zeitglied 712 (sowie ggf. das zweite Zeitglied 736) sorgen dafür, dass das erste Auslösesignal A1 auch dann ausgegeben wird, wenn nicht gleichzeitig die Unterschreitung des ersten Spannungsschwellwerts Us1 und die Überschreitung des ersten Stromschwellwerts Is1 stattfindet. Vielmehr brauchen die Unterschreitung des ersten Spannungsschwellwerts Us1 und die Überschreitung des ersten Stromschwellwerts Is1 lediglich innerhalb einer vorgegebenen ersten Zeitspanne stattzufinden, um das erste Auslösesignal 1 zu erzeugen. Diese erste Zeitspanne entspricht entweder der zweiten Zeitdauer des ersten Zeitglieds 712 oder - für den Fall, dass zusätzlich ein zweites Zeitglied 736 vorhanden ist - ergibt sich diese erste Zeitspanne aus der zweiten Zeitdauer des ersten Zeitglieds 712 und der zweiten Zeitdauer des zweiten Zeitglieds 736.

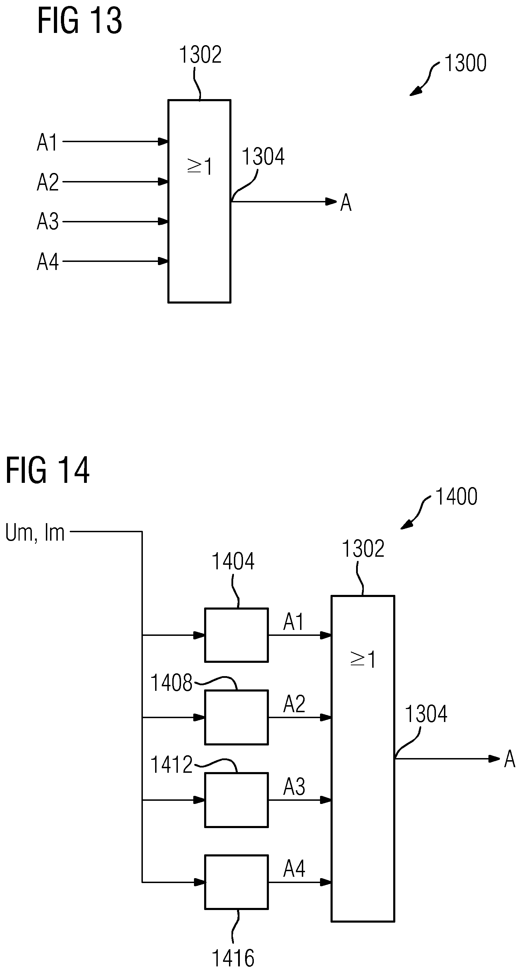

Sobald das erste Auslösesignal A1 ausgegeben wird (d. h. sobald das erste Auslösesignal A1 den logischen Wert 1 annimmt), wird auch das (Gesamt-)Auslösesignal A ausgegeben, d. h. auf logisch 1 (logisches 1-Signal) gesetzt (vgl. Figur 13).

Das erste Auslösesignal A1 wird also dann erzeugt, wenn - insbesondere innerhalb der vorbestimmten ersten Zeitspanne - sowohl die Spannungsmesswerte Um kleiner werden als der erste Spannungsschwellwert Us1 und die Strommesswerte Im größer werden als der erste Stromschwellwert Is1. Es werden also zwei Größen ausgewertet, um das erste Auslösesignal A1 zu erzeugen: die Spannungsmesswerte Um und die Strommesswerte Im. Eine derartige Änderung der Spannungsmesswerte Um und der Strommesswerte Im tritt im Ausführungsbeispiel dann auf, wenn an der ersten HGÜ-Leitung 24 der Kurzschluss 230 auftritt (vgl. Figur 2). Dann steigt aufgrund des Kurzschlusses 230 der Gleichstrom I an, d. h. die Strommesswerte Im überschreiten den ersten Stromschwellwert Is1. Gleichzeitig kommt es zu einem Spannungseinbruch an der ersten HGÜ-Leitung 24, wodurch die Spannungsmesswerte Um kleiner werden; die Spannungsmesswerte Um unterschreiten also den ersten Spannungsschwellwert Us1. Auf diese Art und Weise wird der Fehler an der ersten HGÜ-Leitung 24 erkannt und daraufhin das erste Auslösesignal A1 erzeugt. Daraufhin wird das (Gesamt-)Auslösesignal A erzeugt (d. h. auf ein logisches 1-Signal gesetzt) . Auf das Auslösesignal A hin löst der erste Gleichstromleistungsschalter 22 aus und unterbricht den Stromfluss von der ersten HGÜ-Station 11 zu der ersten HGÜ-Leitung 24. Dadurch wird der Fehler an der ersten HGÜ-Leitung 24 geklärt. Der erste Spannungsschwellwert Us1 kann beispielsweise 40% der Nennspannung der ersten HGÜ-Leitung 24 entsprechen. Der erste Stromschwellwert Is1 kann beispielsweise 120% des Nennstromes der ersten HGÜ-Leitung 24 entsprechen.

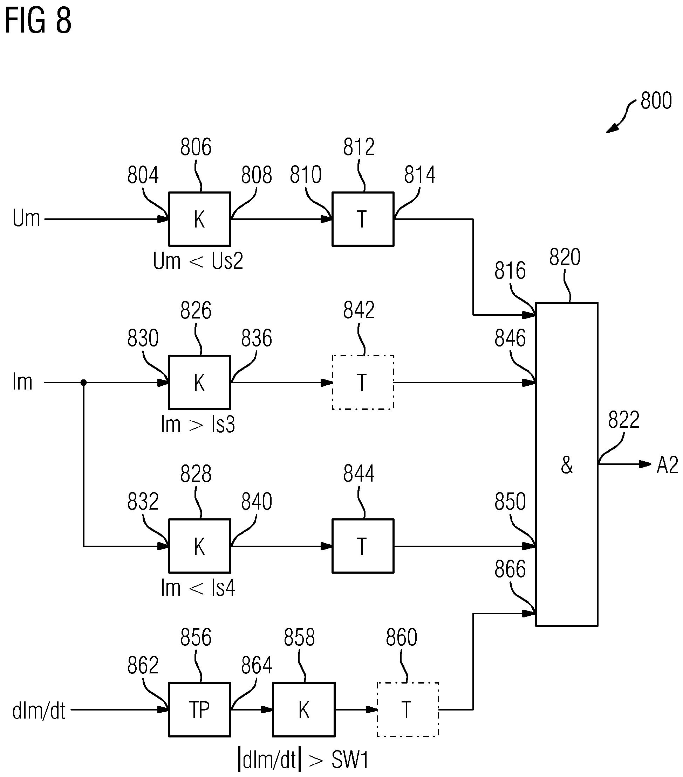

In Figur 8 ist ein Ausführungsbeispiel einer zweiten Logikschaltung 800 dargestellt. Diese zweite Logikschaltung 800 wertet die Spannungsmesswerte Um und die Strommesswerte Im aus und erzeugt im Ergebnis dieser Auswertung ein zweites Auslösesignal A2. Die zweite Logikschaltung 800 realisiert einen Überstromschutz mit einer Stromrichtungserkennung.

Im oberen Teil der Figur 8 ist ein erster Schaltungsteil der zweiten Logikschaltung 800 dargestellt. Der erste Schaltungsteil wertet aus, ob die Spannungsmesswerte Um einen zweiten Spannungsschwellwert Us2 unterschreiten. Dies erfolgt in ähnlicher Art und Weise wie oben in Verbindung mit dem oberen Teil der ersten Logikschaltung 700 der Figur 7 dargestellt und beschrieben ist. Zu diesem Zweck werden die Spannungsmesswerte Um einem Eingang 804 eines dritten Komparators 806 zugeführt. Ein Ausgang 808 des dritten Komparators 806 ist mit einem Eingang 810 eines dritten Zeitglieds 812 verbunden. Ein Ausgang 814 des dritten Zeitglieds 812 ist mit einem ersten Eingang 816 eines zweiten UND-Glieds 820 verbunden. An einem Ausgang 822 des zweiten UND-Glieds 820 wird das zweite Auslösesignal A2 ausgegeben. Der dritte Komparator 806 erkennt, wenn die Spannungsmesswerte Um den zweiten Spannungsschwellwert Us2 unterschreiten. Dann wird am Ausgang 808 des dritten Komparators 806 ein logisches 1-Signal ausgegeben. Das dem dritten Komparator 806 nachgeschaltete dritte Zeitglied 812 speichert das Ausgangssignal des dritten Komparators 806 für eine vorbestimmte Haltezeit. Der zweite Spannungsschwellwert Us2 kann so groß sein wie der erste Spannungsschwellwert Us1 (also beispielsweise 60% der Nennspannung der ersten HGÜ-Leitung 24 entsprechen).

Im mittleren Teil der Figur 8 ist ein zweiter Schaltungsteil der zweiten Logikschaltung 800 dargestellt. Dieser zweite Schaltungsteil dient zum Erkennen, ob bei dem durch die HGÜ-Leitung fließenden Strom eine Stromrichtungsumkehr stattfindet. Dazu weist der zweite Schaltungsteil einen vierten Komparator 826 sowie einen fünften Komparator 828 auf. Sowohl an einen Eingang 830 des vierten Komparators 826 als auch an einen Eingang 832 des fünften Komparators 828 werden die Strommesswerte Im angelegt. Der vierte Komparator 826 gibt an seinem Ausgang 836 ein logisches 1-Signal aus, sobald die Strommesswerte Im einen dritten Stromschwellwert Is3 überschreiten. Der fünfte Komparator 828 gibt an seinem Ausgang 840 dann ein logisches 1-Signal aus, sobald die Strommesswerte einen vierten Stromschwellwert Is4 unterschreiten. Dieser vierte Stromschwellwert Is4 ist ein negativer Stromschwellwert. Der dritte Stromschwellwert Is3 ist ein positiver Stromschwellwert. Durch diese beiden Vergleiche kann erkannt werden, wenn innerhalb einer zweiten Zeitspanne die Strommesswerte ihr Vorzeichen ändern (also sich beispielsweise von einem negativen Strommesswert zu einem positiven Strommesswert verändern) . Die zweite Zeitspanne wird durch ein viertes Zeitglied 842 und/oder ein fünftes Zeitglied 844 realisiert. Dabei braucht nur eines der beiden Zeitglieder 842, 844 vorhanden zu sein. Beispielsweise braucht nur das fünfte Zeitglied 844 vorhanden zu sein, das vierte Zeitglied 842 kann optional sein. Selbstverständlich können aber auch beide Zeitglieder 842, 844 vorhanden sein. Der Ausgang 836 des vierten Komparators 826 ist über das vierte Zeitglied 842 mit einem zweiten Eingang 846 des zweiten UND-Glieds 820 elektrisch verbunden. Der Ausgang 840 des fünften Komparators 828 ist über das fünfte Zeitglied 844 mit einem dritten Eingang 850 des zweiten UND-Glieds 820 elektrisch verbunden. Der dritte Stromschwellwert Is3 kann beispielsweise 10% des Nennstromes der ersten HGÜ-Leitung 24 entsprechen. Der vierte Stromschwellwert Is4 kann beispielsweise minus 10% des Nennstromes der ersten HGÜ-Leitung 24 entsprechen.

Im unteren Teil der Figur 8 ist ein dritter Schaltungsteil der zweiten Logikschaltung 800 dargestellt. Mit diesem optionalen dritten Schaltungsteil wird erkannt, ob der Betrag der zeitlichen Änderung der Strommesswerte dIm/dt einen vorbestimmten ersten Stromänderungsschwellwert SW1 überschreitet. Dazu weist der dritte Schaltungsteil der zweiten Logikschaltung 800 ein Tiefpassfilter 856, einen sechsten Komparator 858 sowie ein sechstes Zeitglied 860 auf. Die erste zeitliche Ableitung dIm/dt der Strommesswerte Im (bei denen es sich um die gleichen Strommesswerte Im handelt, die im zweiten Schaltungsteil der zweiten Logikschaltung 800 ausgewertet worden sind) werden einem Eingang 862 des Tiefpassfilters 856 zugeführt. Das Tiefpassfilter 856 entfernt störende hochfrequente Anteile in der ersten zeitlichen Ableitung dIm/dt der Strommesswerte Im, wie sie beispielsweise durch Rauscheffekte entstehen können. Ein Ausgang 864 des Tiefpassfilters 856 ist über den sechsten Komparator 858 und das sechste Zeitglied 860 mit einem vierten Eingang 866 des zweiten UND-Glieds 820 verbunden. Der sechste Komparator 858 erkennt, wenn der Betrag der zeitlichen Änderung der Strommesswerte |dIm/dt| den vorbestimmten ersten Stromänderungsschwellwert SW1 überschreitet. Das sechste Zeitglied 860 speichert für eine vorbestimmte Zeitspanne den an dem Ausgang des sechsten Komparators 858 ausgegebenen Wert zwischen. Bei dem Tiefpassfilter 856 kann es sich beispielsweise um einen Butterworth-Filter dritter Ordnung handeln. Das Tiefpassfilter 856 kann beispielsweise eine Grenzfrequenz von 1 kHz aufweisen. Die in den Figuren 7 und 8 dargestellten Zeitglieder können jeweils eine vorbestimmte Haltedauer von beispielsweise 100 ms aufweisen; diese Haltedauern bestimmen die Länge der ersten Zeitspanne und der zweiten Zeitspanne. Die erste Zeitspanne und die zweite Zeitspanne können beispielsweise jeweils 100 ms betragen.

Sobald gleichzeitig am ersten Eingang 816, am zweiten Eingang 846, am dritten Eingang 850 und am vierten Eingang 866 des zweiten UND-Glieds 820 ein logisches 1-Signal anliegt, wird am Ausgang 822 des UND-Glieds 820 das zweite Auslösesignal A2 ausgegeben. Das zweite Auslösesignal A2 wird also dann ausgegeben, wenn innerhalb einer vorbestimmten zweiten Zeitspanne sowohl die Spannungsmesswerte Um den vorbestimmten zweiten Spannungsschwellwert Us2 unterschreiten, die Strommesswerte Im ihr Vorzeichen ändern (weil der durch den Gleichspannungsleistungsschalter fließende Gleichstrom eine Stromrichtungsumkehr aufweist) und die zeitliche Änderung der Strommesswerte den vorbestimmten ersten Stromänderungsschwellwert SW1 überschreiten. Mit Hilfe dieser drei Kriterien wird ein Fehler an der HGÜ-Leitung folgendermaßen erkannt: Aufgrund des Fehlers (Kurzschlusses) bricht die Spannung ein, so dass die Spannungsmesswerte kleiner werden. Gleichzeitig bzw. innerhalb der zweiten Zeitspanne ändert der Gleichstrom in der HGÜ-Leitung seine Richtung, weil aufgrund des Kurzschlusses an der HGÜ-Leitung der jeweilige Stromrichter der betroffenen HGÜ-Station nicht mehr (wie beabsichtigt) Strom aus der HGÜ-Leitung entnimmt, sondern (ungewollt) aufgrund des Kurzschlusses an der HGÜ-Leitung Strom in die HGÜ-Leitung einspeist. Dadurch kommt die Stromrichtungsumkehr beim Gleichspannungsleistungsschalter zustande. Schließlich muss die Stromänderung innerhalb der zweiten Zeitspanne auch noch mit einer Mindestgeschwindigkeit stattfinden, damit ein Fehler an der HGÜ-Leitung erkannt wird. Das bedeutet, der Gradient di/dt muss den ersten Stromänderungsschwellwert SW1 überschreiten. So werden schnelle Stromänderungen aufgrund eines Kurzschlusses unterschieden von langsamen Stromänderungen, die beispielsweise aufgrund einer normalen Laständerung an dem Multi-Terminal-HGÜ-System auftreten können. Der zweite Spannungsschwellwert Us2 kann bei diesem Ausführungsbeispiel so groß sein wie der erste Spannungsschwellwert Us1 der ersten Logikschaltung 700 nach Figur 7.

Sobald das zweite Auslösesignal A2 ausgegeben wird (d. h. als zweites Auslösesignal ein logisches 1-Signal am Ausgang des UND-Glieds 820 ausgegeben wird), wird auch das (Gesamt-)Auslösesignal A (als logisches 1-Signal) ausgegeben (vgl. Figur 13).

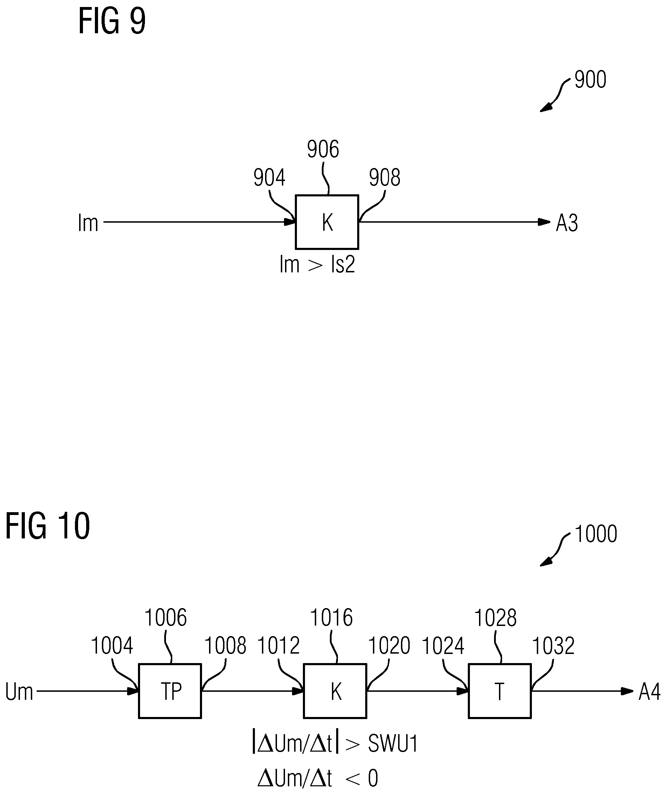

In Figur 9 ist ein Ausführungsbeispiel einer dritten optionalen Logikschaltung 900 dargestellt. Diese dritte Logikschaltung 900 wertet die Strommesswerte Im aus und erzeugt als Ergebnis der Auswertung ein drittes Auslösesignal A3. Die dritte Logikschaltung realisiert eine reine Überstromerkennung.

Die Strommesswerte Im werden einem Eingang 904 eines siebenten Komparators 906 zugeführt. Sobald die Strommesswerte Im einen vorbestimmten zweiten Stromschwellwert Is2 überschreiten, wird an einem Ausgang 908 des siebenten Komparators 906 das dritte Auslösesignal A3 ausgegeben (d. h. das dritte Auslösesignal wird als ein logisches 1-Signal ausgegeben) . Der zweite vorbestimmte Stromschwellwert Is2 ist dabei vorteilhafterweise größer als der erste vorbestimmte Stromschwellwert Is1. Optional ist außerdem der zweite vorbestimmte Stromschwellwert Is2 größer als der dritte vorbestimmte Stromschwellwert Is3. Dies hat zur Folge, dass das dritte Auslösesignal später erzeugt wird als das erste Auslösesignal A1 oder das zweite Auslösesignal A2. Das dritte Auslösesignal stellt somit ein Reserve-Auslösesignal dar, das nur dann erzeugt wird, wenn - beispielsweise aufgrund eines Fehlers in den Logikschaltungen - das erste Auslösesignal A1 und das zweite Auslösesignal A2 nicht erzeugt werden. Beispielsweise kann der vorbestimmte zweite Stromschwellwert so groß gewählt werden wie der Bemessungsausschaltstrom des zugeordneten Gleichstromleistungsschalters. Dadurch wird ein Schutz des Gleichstromleistungsschalters erreicht, weil der Gleichstromleistungsschalter immer rechtzeitig abgeschaltet wird, bevor er durch zu große Fehlerströme beschädigt werden würde. Die dritte Logikschaltung realisiert also einen Back-up-Schutz für den jeweiligen Gleichstromleistungsschalter. Dieser Back-up-Schutz verhindert, dass die durch den Gleichstromleistungsschalter fließenden Gleichströme so große Werte annehmen können, dass der Gleichstromleistungsschalter dadurch beschädigt werden würde. Der zweite Stromschwellwert Is2 kann beispielsweise 150% des Nennstromes der ersten HGÜ-Leitung 24 entsprechen.

In Figur 10 ist ein Ausführungsbeispiel einer vierten Logikschaltung 1000 dargestellt. Diese vierte Logikschaltung 1000 wertet die Spannungsmesswerte Um aus und erzeugt als Ergebnis der Auswertung ein viertes Auslösesignal A4. Die vierte Logikschaltung 1000 realisiert eine Erkennung eines schnellen Spannungseinbruchs.

Die Spannungsmesswerte Um gelangen zu einem Eingang 1004 eines optionalen zweiten Tiefpassfilters 1006. Das zweite Tiefpassfilter 1006 entfernt störende hochfrequente Anteile in den Spannungsmesswerten Um, wie sie beispielsweise durch Rauscheffekte entstehen können. Die Grenzfrequenz des Tiefpassfilters 1006 kann beispielsweise 1 kHz betragen. Das Tiefpassfilter 1006 ist optional und kann auch weggelassen werden. Ein Ausgang 1008 des zweiten Tiefpassfilters 1006 ist mit einem Eingang 1012 eines achten Komparators 1016 elektrisch verbunden.

Der achte Komparator 1016 vergleicht die Spannungsmesswerte Um mit einem ersten vorbestimmten Spannungsänderungsschwellwert SWU1. Sobald bei einer gemittelten zeitlichen Änderung der Spannungsmesswerte kleiner Null (ΔUm/Δt < 0) der Betrag der gemittelten zeitlichen Änderung ΔUm/Δt der Spannungsmesswerte den ersten Spannungsänderungsschwellwert SWU1 übersteigt (|ΔUm/Δt| > SWU1), wird an einem Ausgang 1020 des achten Komparators 1016 ein logisches 1-Signal ausgegeben. Der Ausgang 1020 des achten Komparators 1016 ist mit einem Eingang 1024 eines siebenten Zeitgliedes 1028 verbunden. An einem Ausgang 1032 des siebenten Zeitgliedes 1028 wird das vierte Auslösesignal A4 ausgegeben.

Die gemittelte zeitliche Änderung ΔUm/Δt der Spannungsmesswerte Um wird dabei vorzugsweise so ermittelt, dass dabei ein erster Spannungsmesswert Um(T1) zu einem ersten Zeitpunkt T1 und ein weiterer Spannungsmesswert Um(T1+NT) zu einem weiteren Zeitpunkt T1+NT ermittelt wird, dann die Differenz der Spannungsmesswerte Um(T1) und Um(T1+NT) ermittelt wird (Um(T1+NT) - Um(T1)) und anschließend diese Differenz durch die Zeitdifferenz NT zwischen den beiden Spannungsmesswerten geteilt wird: ΔUm/Δt = (Um(T1+NT) - Um(T1)) / NT. Dabei ist N eine positive ganze Zahl größer Null und T die Zeit zwischen zwei aufeinanderfolgenden äquidistanten Spannungsmesswerten. Dabei ist N insbesondere größer als 1. Zum Beispiel kann N die Werte 2, 3, 4 oder 5 usw. annehmen. Durch die Wahl von N ergibt sich eine Filterung bzw. Mittelung über N Spannungsmesswerte. Dadurch werden hochfrequente Störungen der gemessenen Spannung ausgefiltert. Diese gemittelte zeitliche Änderung ΔUm/Δt kann insbesondere mittels zeitdiskreter Signalverarbeitungsglieder ermittelt werden, wobei T der Abtastschritt zwischen zwei aufeinanderfolgenden (diskreten) Spannungsmesswerten Um ist.

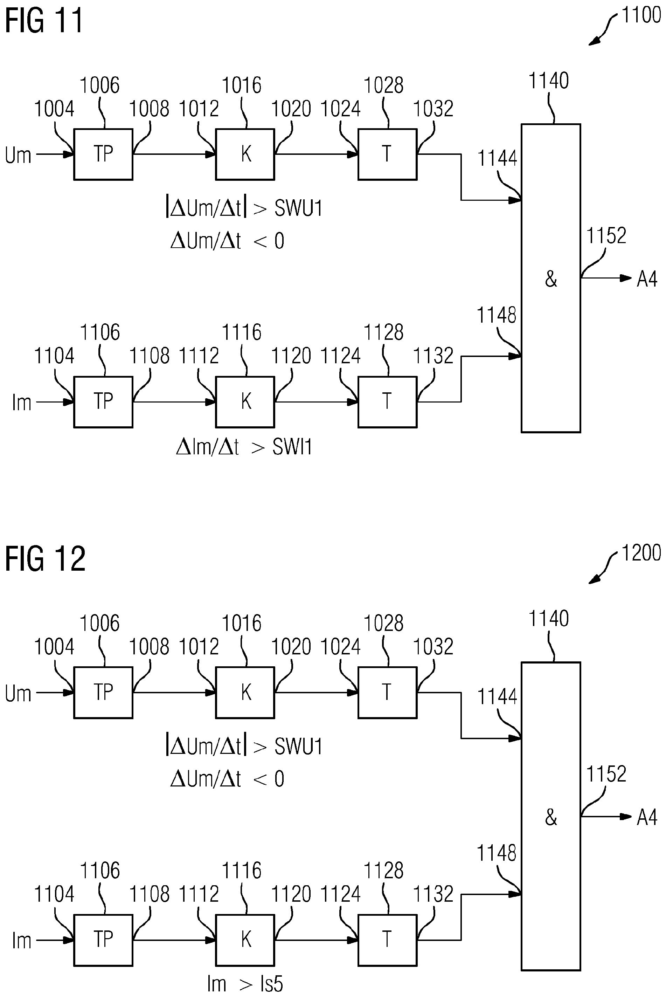

In Figur 11 ist ein Ausführungsbeispiel einer fünften Logikschaltung 1100 dargestellt. Diese fünfte Logikschaltung 1100 wertet die Spannungsmesswerte Um und die Strommesswerte Im aus und erzeugt als Ergebnis der Auswertung das vierte Auslösesignal A4. Die vierte Logikschaltung 1000 realisiert eine Erkennung eines schnellen Spannungseinbruchs in Verbindung mit einem schnellen Stromanstieg.

Bei der fünften Logikschaltung 1100 erfolgt die Auswertung der Spannungsmesswerte Um wie bei der vierten Logikschaltung 1000 gemäß Figur 10. Zusätzlich werden die Strommesswerte Im ausgewertet. Die Auswertung der Strommesswerte Im erfolgt in einem zusätzlichen Zweig (im unteren Teil) der fünften Logikschaltung 1100.

Die Strommesswerte Im gelangen zu einem Eingang 1104 eines optionalen dritten Tiefpassfilters 1106. Das dritte Tiefpassfilter 1106 entfernt störende hochfrequente Anteile in den Strommesswerten Im, wie sie beispielsweise durch Rauscheffekte entstehen können. Die Grenzfrequenz des Tiefpassfilters 1106 kann beispielsweise 10 kHz betragen. Das Tiefpassfilter 1106 ist optional und kann auch weggelassen werden. Ein Ausgang 1108 des dritten Tiefpassfilters 1106 ist mit einem Eingang 1112 eines neunten Komparators 1116 elektrisch verbunden.

Der neunte Komparator 1116 vergleicht die Strommesswerte Im mit einem ersten vorbestimmten Stromänderungsschwellwert SWI1. Sobald die gemittelte zeitliche Änderung ΔIm/Δt der Strommesswerte den ersten Stromänderungsschwellwert SWI1 übersteigt (|ΔIm/Δt| > SWI1), wird an einem Ausgang 1120 des neunten Komparators 1116 ein logisches 1-Signal ausgegeben. Der Ausgang 1120 des neunten Komparators 1116 ist mit einem Eingang 1124 eines achten Zeitgliedes 1128 verbunden. Das achte Zeitglied 1128 weist einen Ausgang 1132 auf.

Weiterhin weist die fünfte Logikschaltung 1100 ein drittes UND-Glied 1140 auf. Der Ausgang 1032 des siebenten Zeitgliedes 1028 ist mit einem ersten Eingang 1144 des dritten UND-Glieds 1140 verbunden. Der Ausgang 1132 des achten Zeitglieds 1128 ist mit einem zweiten Eingang 1148 des dritten UND-Glieds 1140 verbunden. An einem Ausgang 1152 des dritten UND-Glieds 1140 wird das vierte Auslösesignal A4 ausgegeben.

Die gemittelte zeitliche Änderung ΔIm/Δt der Strommesswerte Im wird dabei gleichartig ermittelt wie die gemittelte zeitliche Änderung ΔUm/Δt der Spannungsmesswerte Um. Die gemittelte zeitliche Änderung ΔIm/Δt der Strommesswerte Im wird dabei vorzugsweise so ermittelt, dass ein erster Strommesswert Im(T1) zu einem ersten Zeitpunkt T1 und ein weiterer Strommesswert Im(T1+NT) zu einem weiteren Zeitpunkt T1+NT ermittelt wird, dann die Differenz der Strommesswerte Im(T1) und Im(T1+NT) ermittelt wird (Im(T1+NT) - Im(T1)) und anschließend diese Differenz durch die Zeitdifferenz NT zwischen den beiden Spannungsmesswerten geteilt wird: ΔIm/Δt = (Im(T1+NT) - Im(T1)) / NT. Dabei ist N eine positive ganze Zahl größer Null und T die Zeit zwischen zwei aufeinanderfolgenden äquidistanten Strommesswerten. Dabei ist N insbesondere größer als 1. Zum Beispiel kann N die Werte 2, 3, 4 oder 5 usw. annehmen. Durch die Wahl von N ergibt sich eine Mittelung über N Strommesswerte. Dadurch werden hochfrequente Störungen des gemessenen Stroms ausgefiltert. Diese gemittelte zeitliche Änderung ΔIm/Δt kann insbesondere mittels zeitdiskreter Signalverarbeitungsglieder ermittelt werden, wobei T der Abtastschritt zwischen zwei aufeinanderfolgenden (diskreten) Strommesswerten Im ist.

In Figur 12 ist ein Ausführungsbeispiel einer sechsten Logikschaltung 1200 dargestellt. Diese sechste Logikschaltung 1200 wertet die Spannungsmesswerte Um und die Strommesswerte Im aus und erzeugt als Ergebnis der Auswertung das vierte Auslösesignal A4. Die sechste Logikschaltung 1000 realisiert eine Erkennung eines schnellen Spannungseinbruchs in Verbindung mit einem Stromanstieg.

Die sechste Logikschaltung 1200 unterscheidet sich von der fünften Logikschaltung 1100 der Figur 11 lediglich dadurch, dass der neunte Komparator 1116 die Strommesswerte Im mit einem fünften vorbestimmten Stromschwellwert Is5 vergleicht (und nicht die gemittelte zeitliche Änderung ΔIm/Δt der Strommesswerte mit dem ersten Stromänderungsschwellwert SWI1 wie bei der fünften Logikschaltung). Sobald die Strommesswerte Im den fünften Stromschwellwert Is5 übersteigen (Im > Is5), wird an dem Ausgang 1120 des neunten Komparators 1116 ein logisches 1-Signal ausgegeben.

In Figur 13 ist ein Ausführungsbeispiel einer siebenten Logikschaltung 1300 dargestellt. Diese siebente Logikschaltung 1300 besteht aus einem ODER-Glied 1302. Dieses ODER-Glied 1302 gibt an seinem Ausgang 1304 dann das (Gesamt-)Auslösesignal A als logisches 1-Signal aus, wenn entweder das erste Auslösesignal A1, das zweite Auslösesignal A2, das dritte Auslösesignal A3 oder das vierte Auslösesignal A4 (oder mehrere der Auslösesignale A1, A2, A3, A4) als logisches 1-Signal an den Eingängen des ODER-Glieds 1302 anliegt. In einem anderen Ausführungsbeispiel kann die siebente Logikschaltung 1300 auch weniger (oder mehr) als 4 Eingänge aufweisen. Das bedeutet, dass das
(Gesamt-)Auslösesignal A auch dann ausgegeben werden kann, wenn nur ausgewählte Auslösesignale der vier Auslösesignale A1, A2, A3 und A4 erzeugt werden, weil nur ausgewählte Schutzkriterien angewendet werden.

Auf das Auslösesignal A hin unterbricht der Gleichstromleistungsschalter den Stromfluss zwischen der Hochspannungsgleichstromquelle und dem Fehlerort an der Hochspannungsgleichstromübertragungsleitung. Der Gleichstromleistungsschalter schaltet also auf das Auslösesignal A hin den zum Fehlerort fließenden Strom ab. Die in den Figuren 7 bis 12 dargestellten Logikschaltungen können auch jeweils eigenständig zur Erzeugung des Auslösesignals A genutzt werden. Beispielsweise kann die in Figur 10 dargestellte vierte Logikschaltung 1000 (ohne Mitwirkung der ersten Logikschaltung 700, der zweiten Logikschaltung 800 und der dritten Logikschaltung 900) das Auslösesignal A erzeugen. Das vierte Auslösesignal A4 wird dann als (Gesamt-)Auslösesignal A ausgegeben.

In Figur 14 ist überblicksartig eine beispielhafte Schaltung 1400 mit den einzelnen Logikschaltungen dargestellt. In Übereinstimmung mit Figur 13 ist das ODER-Glied 1302 dargestellt, an dessen Eingängen die vier (Einzel-)Auslösesignale A1 bis A4 anliegen. Dabei symbolisiert der Block 1404 die dritte Logikschaltung 900 gemäß Figur 9, der Block 1408 die erste Logikschaltung 700 gemäß Figur 7, der Block 1412 die zweite Logikschaltung 800 gemäß Figur 8 und der Block 1416 die vierte Logikschaltung 1000, die fünfte Logikschaltung 1100 oder die sechste Logikschaltung 1200 gemäß den Figuren 10, 11 oder 12. Bei der Schaltung 1400 können einer oder mehrere der Blöcke weggelassen werden. Die Schaltung 1400 funktioniert beispielsweise auch nur mit dem Block 1416 (in diesem Fall wird das ODER-Glied 1302 nicht benötigt) oder nur mit den Blöcken 1416 und 1404.

Die beschriebene Anordnung und das beschriebene Verfahren ermöglichen einen sicheren und selektiven Schutz insbesondere für ein Multi-Terminal-HGÜ-System. Mit Vorteil können die Anordnung und/oder das Verfahren bei einer Hochspannungsgleichstromübertragungsleitung in Form eines kunststoffisolierten Hochspannungsgleichstromübertragungskabels eingesetzt werden. Dies kann insbesondere bei einem Multi-Terminal-HGÜ-System erfolgen, bei dem die HGÜ-Übertragungsstrecken einen signifikanten Anteil an kunststoffisolierten Kabeln aufweisen und bei denen die Fehlerklärung mittels Gleichstromleistungsschalter (DCCB) erfolgt. Die beschriebene Anordnung und das beschriebene Verfahren weisen folgende Vorteile auf:
Die Kabelentladungsströme werden begrenzt und es wird eine schnelle Abschaltung der fehlerhaften Leitung zum Schutz der Komponenten realisiert. Durch die Entladung der Kabelkapazitäten tritt nämlich im Fehlerfall ein schnell ansteigender Kabelentladungsstrom auf. Die im Umrichter und Gleichstrom-Leistungsschalter verbauten Halbleiterelemente weisen jedoch oft nur eine geringe Überstromfähigkeit auf. Deshalb sind eine Begrenzung der Kabelentladungsströme und eine schnelle Abschaltung der fehlerhaften Leitung vorteilhaft.

Unerwünschte negative Spannungsamplituden auf der Hochspannungsgleichstromübertragungsleitung werden vorteilhafterweise begrenzt. Zukünftige HGÜ-Systeme werden vermutlich einen hohen Anteil an Hochspannungsgleichstromübertragungsleitungen in Form von kunststoffisolierten Hochspannungsgleichstromübertragungskabeln (zum Beispiel von sogenannten VPE-Kabeln, d.h. mit dem Isoliermaterial VPE isolierten Kabeln) aufweisen. Der Betrieb mit Gleichspannung führt dabei zu Raumladungsansammlungen im Isoliermaterial.

Treten transiente Spannungen entgegengesetzter Polarität auf, können diese zu hohen elektrischen Belastungen des Isoliermaterials und schließlich zum Isolationsversagen führen. Im Fehlerfall können aufgrund von Wanderwellenreflexionen Spannungen mit entgegengesetzter Polarität auftreten. Eine Begrenzung der negativen Spannungsamplitude ist daher zum Schutz der Kunststoffisolierung vorteilhaft.

Die beschriebene Anordnung und das beschriebene Verfahren ermöglichen einen schnellen und selektiven Schutz, insbesondere in einem Multi-Terminal-HGÜ-System. Eine Abschaltung von fehlerbetroffenen Leitungen im unteren Millisekundenbereich (insbesondere im unteren einstelligen Millisekundenbereich) erscheint damit möglich. Dadurch wird eine hohe Verfügbarkeit des Systems gewährleistet. Hierdurch wird die Sicherheit der System-Komponenten gewährleistet und die Auswirkungen auf benachbarte fehlerfreie Komponenten und die Gesamtbelastung der Komponenten wird reduziert. Insbesondere bei der Verwendung von leistungselektronischen Gleichstromleistungsschaltern lassen sich sehr geringe Schaltertotzeiten realisieren.

Zur Begrenzung der Kabelentladung im Fehlerfall wird eine Induktivität eingesetzt, beispielsweise als dritte Induktivität 624. Die Größe der Induktivität hängt von der Systemtopologie **ab;** sie kann beispielsweise mehrere 10 mH betragen. Neben der Begrenzung der Stromsteilheit führt die Induktivität auch zu einer Veränderung des Spannungs-Wanderwellenverhaltens am Anschlusspunkt der Leitung. Einerseits werden die einlaufenden Spannungswanderwellen stärker reflektiert, was zu höheren negativen Spannungsamplituden auf der fehlerbehafteten Leitung führt. Andererseits führt die Induktivität zu einer teilweisen Entkopplung der Spannungen zwischen angrenzenden Leitungen, sodass der Spannungseinbruch auf benachbarten Leitungen vorteilhafterweise gedämpft erfolgt.

Der zusätzliche Strompfad (Freilaufpfad) der Anordnung führt zu einer Begrenzung der negativen Spannungsamplituden auf der fehlerbehafteten Leitung. Gleichzeitig stellt der Freilaufpfad einen zusätzlichen (insbesondere niederohmigen) Entladungspfad für die Kabelentladung dar. Dies führt zu einer Aufteilung des leitungsseitigen Fehlerstroms auf den Freilaufpfad und den Hauptstrompfad (insbesondere den Betriebsstrompfad) des Gleichstromleistungsschalters. Hierdurch ergeben sich leitungsseitig steile Stromanstiege mit hohen Stromamplituden, wohingegen der Strom durch den Gleichstromleistungsschalter durch die Induktivität begrenzt wird. Demzufolge kann eine frühzeitige Erkennung der hohen leitungsseitigen Fehlerstromamplituden erfolgen, ohne die innerhalb des Gleichstromleistungsschalters verwendeten (Halbleiter-)Elemente zu überlasten.

Es wird ein robuster, schneller und selektiver Leitungsschutz realisiert. Eines der beschriebenen Schutzkriterien (das sogenannte Δv/Δt-Kriterium) wertet die gemittelte zeitliche Änderung Δv/Δt der Spannungsmesswerte Um aus. Dieses Schutzkriterium ist robust, selektiv und schnell. Dieses Schutzkriterium wertet den Spannungseinbruch innerhalb eines definierten Zeitfensters (vorbestimmte dritte Zeitspanne) aus: Wenn der Betrag der Differenz zweier Spannungswerte Δv im Abstand von Δt den vorgewählten Grenzwert (Spannungsänderungsschwellwert SWU1) überschreitet und gleichzeitig die Spannung kleiner wird, dann wird das Auslösesignal (insbesondere das Auslösesignal A4) für den Gleichstromleistungsschalter erzeugt.

Insbesondere wird das Auslösesignal für den Gleichstromleistungsschalter nur dann erzeugt, wenn die genannten Voraussetzungen mindestens eine vorbestimmte Zeitdauer lang vorliegen. Diese vorbestimmte Zeitdauer kann dabei durch die erste Zeitdauer des entsprechenden Zeitglieds (hier: des siebenten Zeitglieds 1028) bestimmt sein. Dies gilt sinngemäß auch für alle anderen Ermittlungen von Auslösesignalen. Die jeweiligen Auslösesignale können optional nur dann erzeugt werden, wenn die ausgewerteten Spannungs- und/oder Strommesswerte das jeweilige Auslösekriterium/Überwachungskriterium/Schutzkriterium mindestens eine vorbestimmte Zeitdauer lang erfüllen.

Alternativ wird das Auslösesignal A4 für den Gleichstromleistungsschalter nur dann erzeugt, wenn gleichzeitig mit der oben beschriebenen zeitliche Änderung Δv/Δt der Spannungsmesswerte Um ein schneller Anstieg des Leitungsstroms Im erkannt wird oder wenn gleichzeitig der Leitungsstrom Im den vorgewählten fünften Stromschwellwert Is5 überschreitet.

Aufgrund der Entkopplung der Spannungsverläufe benachbarter Leitungen durch die dritte Induktivität 624 ergeben sich unterschiedliche (initiale) Spannungseinbrüche auf fehlerbehafteten und fehlerfreien Leitungen. Dadurch ist eine eindeutige Unterscheidung zwischen fehlerbehafteten und fehlerfreien Leitungen möglich. Durch eine geeignete Wahl der Parameter (Δv, Δt, vorbestimmte Zeitdauer oder ähnliches) kann so ein besonders selektives, schnelles und robustes Schutzverhalten erzielt werden.

Insbesondere die Anordnung mit der zusätzlichen Induktivität, der Spannungsbegrenzungseinrichtung (Freilaufpfad) und/oder dem schnellen, robusten und selektiven Schutzkriterium (insbesondere dem Δv/Δt-Kriterium) ermöglicht vorteilhafterweise den Schutz der Bauteile des Gleichstrom-Übertragungssystems und des Gleichstromleistungsschalters vor unzulässigen Strom- und Spannungsbelastungen. Außerdem tritt nur eine geringe Energieaufnahme durch die Bauteile auf; auch deshalb erfolgt nur eine geringe Belastung der Bauteile. Deshalb können schnelle Wiederanfahrstrategien (z.B. in teilverkabelten Systemen) umgesetzt und so eine hohe Verfügbarkeit des DC-Übertragungssystems realisiert werden. Insbesondere das Δv/Δt -Kriterium erhöht die Schnelligkeit und Robustheit des Schutzes an den Enden von Kabelübertragungsstrecken.

Durch den kombinierten Einsatz von (insbesondere halbleiterbasierten) Gleichstromleistungsschaltern mit jeweils einer konzentrierten Induktivität (als Bauelement realisiert) und einer Dioden-Spannungsbegrenzungseinrichtung (Dioden-Freilaufpfad) kann die Dauer bis zur Fehlerklärung und/oder die maximal mittels des Gleichstromleistungsschalters zu unterbrechende DC-Stromamplitude signifikant reduziert werden. Hierdurch reduzieren sich die während der Fehlerklärung abzuführende Energie und die Komponentenbelastungen. Im Unterschied zu anderen denkbaren lokalen Schutzkriterien erlaubt das Δv/Δt-Kriterium eine frühzeitige Fehlererkennung mit dem Eintreffen der ersten Spannungswanderwelle. Gleichzeitig wird das Systemverhalten über einen definierten Zeitbereich ausgewertet, wodurch eine hohe Selektivität des Schutzes sowie eine hohe Robustheit erreicht werden können.

Die beschriebene Anordnung und das beschriebene Verfahren können insbesondere mittels einer Kombination aus Hardware und Software realisiert werden. Die Anordnung und das Verfahren ermöglichen einen umfassenden System- und Komponentenschutz insbesondere für Multi-Terminal-HGÜ-Systeme.

Bei dem beschriebenen Verfahren und der beschriebenen Anordnung ist besonders vorteilhaft, dass lediglich an einem einzigen Spannungsmessort die Spannungsmesswerte gemessen zu werden brauchen und an einem einzigen Strommessort die Strommesswerte gemessen zu werden brauchen, um ein Auslösesignal für den jeweils zugeordneten Gleichstromleistungsschalter zu erzeugen. Dadurch wird insbesondere keine schnelle Kommunikationsinfrastruktur zwischen verschiedenen Abschnitten des Multi-Terminal-HGÜ-Systems benötigt, wie sie beispielsweise beim Einsatz eines Leitungsdifferentialschutzes notwendig wäre.

Es wurde ein Verfahren und eine Anordnung beschrieben, mit denen ein selektiver (Leitungs-)Schutz eines Multi-Terminal-HGÜ-Systems realisiert werden kann. Dabei können vorteilhafterweise die Parameter (beispielsweise Us1, Us2, Is1, Is3, Is4 und/oder SW1) so gewählt werden, dass das erste Auslösesignal A1 und das zweite Auslösesignal A2 schnell nach Auftreten eines Fehlers (d.h. früh) erzeugt werden, das dritte Auslösesignal A3 aber langsamer (d.h. später) nach Auftreten des Fehlers erzeugt wird. Damit wird verhindert, dass mehrere Gleichstromleistungsschalter des Multi-Terminal-HGÜ-Systems nahezu gleichzeitig aufgrund des dritten Auslösesignals A3 auslösen und damit große Teile des Multi-Terminal-HGÜ-Systems (oder sogar das gesamte Multi-Terminal-HGÜ-System) unselektiv abgeschaltet wird. Vielmehr können damit vorteilhafterweise das erste Auslösesignal A1 und das zweite Auslösesignal A2 nur dann erzeugt werden, wenn ein Fehler nah am Ort der Spannungsmessung/Strommessung auftritt, wohingegen ein weiter entfernter Fehler keine Erzeugung des ersten Auslösesignals A1 und des zweiten Auslösesignals A2 zur Folge hat. Das Multi-Terminal-HGÜ-System weist insbesondere HGÜ-Stationen mit modularen Multilevelstromrichtern und Modulen in Halbbrückentopologie auf. Weiterhin weist das HGÜ-System vorzugsweise unidirektionale leistungselektronische Gleichstromleistungsschalter auf. Ein solches HGÜ-System kann vorzugsweise mittels eines Freileitungsnetzes aus HGÜ-Leitungen realisiert werden. Mit dem beschriebenen Verfahren und der beschriebenen Anordnung können gleichstromseitige Leitungsfehler (also Fehler an den HGÜ-Leitungen) schnell, selektiv und sicher geklärt werden. Nachdem derartige Fehler mittels der beschriebenen Logikschaltungen erkannt worden sind, wird ein Auslösesignal für den jeweiligen Gleichstromleistungsschalter ausgegeben, woraufhin der Gleichstromleistungsschalter den Stromfluss zu dem Fehlerort unterbricht. Dabei ist besonders vorteilhaft, dass die fehlerbehafteten HGÜ-Leitungen selektiv abgeschaltet werden können, wohingegen die nicht fehlerbehafteten HGÜ-Leitungen weiter betrieben werden können.

Mittels der beschriebenen Logikschaltungen können parallel verschiedene Auswertungen der Spannungsmesswerte Um und/oder der Strommesswerte Im vorgenommen werden. Es werden also unterschiedliche Detektionskriterien/Schutzkriterien ausgewertet. Sobald nur eines der Detektionskriterien als gegeben erkannt wird, führt dies zu einer Gesamtauslösung des Schutzes (das Gesamt-Auslösesignal A wird als logisches 1-Signal ausgegeben) . Als ein erstes Detektionskriterium kann eine reine Überstromerkennung (vgl. Figur 9) eingesetzt werden. Dieses Detektionskriterium ermöglicht durch die unselektive Auslösung bei der Überschreitung eines fixen Stromschwellwerts (des zweiten Stromschwellwerts Is2) einen inhärenten Back-up-Schutz für den Gleichstromleistungsschalter. Die Wahl des zweiten Stromschwellwerts entsprechend des Bemessungsausschaltstroms des Gleichstromleistungsschalters ermöglicht die Realisierung eines Selbstschutzes des Gleichstromleistungsschalters.

Als weiteres Detektionskriteriums wird eine Überstromerkennung bei einem reduzierten Stromschwellwert mit einer zusätzlichen Unterspannungserkennung kombiniert (vgl. die erste Logikschaltung in Figur 7). Dieses Detektionskriterium ermöglicht eine frühere Fehlerdetektion (verglichen mit der reinen Überstromerkennung nach Figur 9). Die Selektivität wird dabei über den ersten Stromschwellwert Is1 sowie über den ersten Spannungsschwellwert Us1 erreicht.

Beim dritten Detektionskriterium wird eine Überstromerkennung bei einem weiter reduzierten Stromschwellwert Is3 mit einer Stromflussumkehrerkennung kombiniert (vgl. zweite Logikschaltung 800 in Figur 8). Dieses Detektionskriterium ermöglicht eine Fehlerdetektion bei einer Stromflussumkehrung bereits nahe des Stromnulldurchgangs (vorteilhafterweise kann der dritte Stromschwellwert Is3 entsprechend klein gewählt werden). Die Selektivität dieses Detektionskriteriums wird über den dritten Stromschwellwert Is3, die Spannungsuntergrenze (Unterspannungsgrenze, zweiter Spannungsschwellwert Us2) und den Stromänderungsschwellwert SW1 (minimale Stromsteilheit di/dt) erreicht.

Weiterhin wird (bei einem vierten Schutzkriterium mittels der Δv/Δt-Ermittlung) ein schneller Spannungseinbruch erkannt (vgl. Figur 10). Optional kann ein im Wesentlichen gleichzeitig mit dem schnellen Spannungseinbruch auftretender schneller Stromanstieg erkannt werden (vgl. Figur 11). Als eine weitere Option kann ein im Wesentlichen gleichzeitig mit dem schnellen Spannungseinbruch auftretender Stromanstieg erkannt werden (vgl. Figur 12).

Die Anordnung und das Verfahren vereinigen die Vorteile einer schnellen und gleichzeitig selektiven Fehlererkennung mit geringen Anforderungen an die Hardware der Schutztechnik (es sind lediglich Vergleiche von Messwerten und die Bestimmung von zeitlichen Änderungen oder Gradienten notwendig). Durch den integrierten Back-up-Schutz ist das Schutzkonzept zudem sicher. Die schnelle Fehlerdetektion ermöglicht eine Reduzierung des Bemessungsausschaltstroms der Gleichspannungsleistungsschalter. Dadurch sind kleinere Gleichspannungsleistungsschalter einsetzbar, was Kostenvorteile mit sich bringt. Zusätzlich wird insbesondere keine schnelle Kommunikationsinfrastruktur benötigt, um die Leitungsfehler an den verschiedenen HGÜ-Leitungen selektiv zu erkennen. Mit dem beschriebenen Verfahren und der beschriebenen Anordnung ist es möglich, einen Fehlerstrom sehr schnell zu unterbrechen, insbesondere innerhalb weniger Millisekunden.

Das beschriebene Verfahren und die beschriebene Anordnung nutzen optional eine Überstromerkennung, wobei zusätzliche Auslösekriterien (Unterspannungserkennung und Stromflussumkehrungserkennung) eingesetzt werden, um die Stromschwellwerte klein wählen zu können. Als weitere alternative Auslösekriterien können die Erkennung eines schnellen Spannungseinbruchs (vgl. Figur 10), die Erkennung eines schnellen Spannungseinbruchs in Verbindung mit einem schnellen Stromanstieg (vgl. Figur 11) und/oder die Erkennung eines schnellen Spannungseinbruchs in Verbindung mit einem Stromanstieg verwendet werden (vgl. Figur 12). Als Messgrößen werden lediglich Messgrößen von Strom und Spannung am zugehörigen Leitungsabgang der HGÜ-Leitung (beispielsweise direkt am Gleichstromleistungsschalter) benötigt. Das beschriebene Verfahren und die beschriebene Anordnung können vorzugsweise für die Realisierung von Multi-Terminal-HGÜ-Verbindungen eingesetzt werden. Sie können größtenteils schnell und kostengünstig realisiert werden.

Die eingangs beschriebenen bekannten Schutzkonzepte können für Hybrid-Gleichstromleistungsschalter eingesetzt werden - das sind Leistungsschalter, die sowohl mechanische als auch elektronische Schaltelemente aufweisen. Bei dem beschriebenen neuen Verfahren und der beschriebenen neuen Anordnung können dagegen vorteilhafterweise (rein) leistungselektronische Gleichstromleistungsschalter eingesetzt werden, die schneller schalten können als Hybrid-Gleichstromleistungsschalter. Es ist aber grundsätzlich auch möglich, bei dem neuen Verfahren und der neuen Anordnung mechanische Gleichstromleistungsschalter oder Hybrid-Gleichstromleistungsschalter einzusetzen.

## Patentansprüche

1. Verfahren zum Erzeugen eines Auslösesignals (A) für einen Gleichstromleistungsschalter (22), der zwischen eine Hochspannungsgleichstromquelle (11) und eine Hochspannungsgleichstromübertragungsleitung (24) geschaltet ist, wobei bei dem Verfahren
- eine an der Hochspannungsgleichstromübertragungsleitung (24) anliegende Spannung unter Gewinnung von Spannungsmesswerten (Um) gemessen wird,
- ein durch die Hochspannungsgleichstromübertragungsleitung (24) fließender Strom unter Gewinnung von Strommesswerten (Im) gemessen wird, und
- durch Auswertung der Spannungsmesswerte (Um) und/oder der Strommesswerte (Im) ein an der Hochspannungsgleichstromübertragungsleitung vorliegender Fehler (230) erkannt wird und daraufhin das Auslösesignal (A) für den Gleichstromleistungsschalter (22) erzeugt wird, wobei
- das Auslösesignal (A) für den Gleichstromleistungsschalter (22) erzeugt wird,
- wenn innerhalb einer vorbestimmten ersten Zeitspanne die Spannungsmesswerte (Um) einen vorbestimmten ersten Spannungsschwellwert (Us1) unterschreiten und die Strommesswerte (Im) einen vorbestimmten ersten Stromschwellwert (Is1) überschreiten, oder
- wenn die Strommesswerte (Im) einen vorbestimmten zweiten Stromschwellwert (Is2) überschreiten,
dadurch gekennnzeichnet, dass
- der erste Stromschwellwert (Is1) kleiner ist als der zweite Stromschwellwert (Is2).

2. Anordnung
- mit einem Gleichstromleistungsschalter (22), einer Hochspannungsgleichstromquelle (11) und einer Hochspannungsgleichstromübertragungsleitung (24), wobei der Gleichstromleistungsschalter (22) zwischen die Hochspannungsgleichstromquelle (11) und die Hochspannungsgleichstromübertragungsleitung (24) geschaltet ist,
- mit einem Spannungssensor (214) zum Messen einer an der Hochspannungsgleichstromübertragungsleitung (24) anliegenden Spannung unter Gewinnung von Spannungsmesswerten (Um),
- mit einem Stromsensor (202) zum Messen eines durch die Hochspannungsgleichstromübertragungsleitung (24) fließenden Stroms unter Gewinnung von Strommesswerten (Im), und
- mit einer Steuereinrichtung (210), welche dazu eingerichtet ist, durch Auswertung der Spannungsmesswerte (Um) und/oder der Strommesswerte (Im) einen an der Hochspannungsgleichstromübertragungsleitung (24) vorliegenden Fehler (230) zu erkennen und daraufhin ein Auslösesignal (A) für den Gleichstromleistungsschalter (22) zu erzeugen, wobei
- die Steuereinrichtung (210) dazu eingerichtet ist, das Auslösesignal (A) für den Gleichstromleistungsschalter (22) zu erzeugen,
- wenn innerhalb einer vorbestimmten ersten Zeitspanne die Spannungsmesswerte (Um) einen vorbestimmten ersten Spannungsschwellwert (Us1) unterschreiten und die Strommesswerte (Im) einen vorbestimmten ersten Stromschwellwert (Is1) überschreiten, oder
- wenn die Strommesswerte (Im) einen vorbestimmten zweiten Stromschwellwert (Is2) überschreiten,
dadurch gekennnzeichnet, dass
- der erste Stromschwellwert (Is1) kleiner ist als der zweite Stromschwellwert (Is2).

3. Anordnung nach Anspruch 2,
**dadurch gekennzeichnet , dass**
- der Gleichstromleistungsschalter (22) ein leistungselektronischer Gleichstromleistungsschalter (22) oder ein Hybrid-Gleichstromleistungsschalter ist.

4. Anordnung nach einem der Ansprüche 2 oder 3,
**dadurch gekennzeichnet , dass**
- der Gleichstromleistungsschalter (22) ein unidirektionaler Gleichstromleistungsschalter (22) ist.

5. Anordnung nach einem der Ansprüche 2 bis 4,
**dadurch gekennzeichnet , dass**
- die Hochspannungsgleichstromquelle (11) einen modularen Multilevelstromrichter (400) aufweist, welcher eine Vielzahl von gleichartigen Modulen (1_1 ... 6_n) aufweist.

6. Anordnung nach Anspruch 5,
**dadurch gekennzeichnet , dass**
- jedes Modul (1_1 ... 6_n) mindestens zwei elektronische Schaltelemente (502, 506) und einen elektrischen Energiespeicher (510) aufweist.

7. Anordnung nach einem der Ansprüche 2 bis 6,
**dadurch gekennzeichnet , dass**
- die Hochspannungsgleichstromquelle (11) zwei modulare Multilevelstromrichter (302, 304) aufweist, deren Gleichstromanschlüsse (PA1, NA1, PA2, NA2) in Reihe geschaltet sind.

8. Anordnung nach einem der Ansprüche 2 bis 7,
**dadurch gekennzeichnet , dass**
- die Hochspannungsgleichstromübertragungsleitung (24) ein kunststoffisoliertes Hochspannungsgleichstromübertragungskabel (24) ist.

## Claims

1. A method for generating an activating signal (A) for a direct current circuit breaker (22) connected between a high-voltage direct current source (11) and a high-voltage direct current transmission line (24), wherein in the method
- a voltage applied to the high-voltage direct current transmission line (24) is measured while obtaining voltage measurement values (Um),
- a current flowing through the high-voltage direct current transmission line (24) is measured while obtaining current measurement values (Im), and
- an error (230) present on the high-voltage direct current transmission line is detected by evaluating the voltage measurement values (Um) and/or the current measurement values (Im), and thereupon the activating signal (A) for the direct current circuit breaker (22) is generated, wherein
- the activating signal (A) for the direct current circuit breaker (22) is generated
- when the voltage measurement values (Um) fall below a predetermined first voltage threshold value (Usl) and the current measurement values (Im) exceed a predetermined first current threshold value (Is1) within a predetermined first time period, or
- when the current measurement values (Im) exceed a predetermined second current threshold value (Is2), **characterised in that**
- the first current threshold value (Is1) is smaller than the second current threshold value (Is2).

2. An arrangement
- with a direct current circuit breaker (22), a high-voltage direct current source (11) and a high-voltage direct current transmission line (24), wherein the direct current circuit breaker (22) is connected between the high-voltage direct current source (11) and the high-voltage direct current transmission line (24),
- with a voltage sensor (214) for measuring a voltage applied to the high-voltage direct current transmission line (24) while obtaining voltage measurement values (Um),
- with a current sensor (202) for measuring a current flowing through the high-voltage direct current transmission line (24) while obtaining current measurement values (Im), and
- with a controller (210) which is set up to detect an error (230) present on the high-voltage direct current transmission line (24) by evaluating the voltage measurement values (Um) and/or the current measurement values (Im) and thereupon to generate an activating signal (A) for the direct current circuit breaker (22), wherein
- the controller (210) is set up to generate the activating signal (A) for the direct current circuit breaker (22)
- when the voltage measurement values (Um) fall below a predetermined first voltage threshold value (Usl) and the current measurement values (Im) exceed a predetermined first current threshold value (Is1) within a predetermined first time period, or
- when the current measurement values (Im) exceed a predetermined second current threshold value (Is2),
**characterised in that**
- the first current threshold value (Is1) is smaller than the second current threshold value (Is2).

3. The arrangement according to claim 2,
**characterised in that**
- the direct current circuit breaker (22) is an electronic power direct current circuit breaker (22) or a hybrid direct current circuit breaker.

4. The arrangement according to any one of claims 2 or 3,
**characterised in that**
- the direct current circuit breaker (22) is a unidirectional direct current circuit breaker (22).

5. The arrangement according to any one of claims 2 to 4,
**characterised in that**
- the high-voltage direct current source (11) has a modular multilevel power converter (400) which has a plurality of modules of the same type (1_1 ... 6_n).

6. The arrangement according to claim 5,
**characterised in that**
- every module (1_1 ... 6_n) has at least two electronic switching elements (502, 506) and an electrical energy store (510).

7. The arrangement according to any one of claims 2 to 6,
**characterised in that**
- the high-voltage direct current source (11) has two modular multilevel power converters (302, 304) whose direct current terminals (PA1, NA1, PA2, NA2) are connected in series.

8. The arrangement according to any one of claims 2 to 7,
**characterised in that**
- the high-voltage direct current transmission line (24) is a plastic insulated high-voltage direct current transmission cable (24).

## Revendications

1. Procédé de génération d'un signal de déclenchement (A) pour un disjoncteur à courant continu (22) qui est connecté entre une source de courant continu haute tension (11) et une ligne de transport d'énergie en courant continu haute tension (24), le procédé comprenant les étapes consistant à
- mesurer une tension présente au niveau de la ligne de transport d'énergie en courant continu haute tension (24) de manière à obtenir des valeurs de mesure de tension (Um),
- mesurer un courant circulant à travers la ligne de transport d'énergie en courant continu haute tension (24) de manière à obtenir des valeurs de mesure de courant (Im), et
- détecter, par évaluation des valeurs de mesure de tension (Um) et/ou des valeurs de mesure de courant (Im), un défaut (230) présent au niveau de la ligne de transport d'énergie en courant continu haute tension, et générer ensuite le signal de déclenchement (A) pour le disjoncteur à courant continu (22), dans lequel
- le signal de déclenchement (A) pour le disjoncteur à courant continu (22) est généré,
- si, à l'intérieur d'un premier intervalle de temps prédéterminé, les valeurs de mesure de tension (Um) passent en dessous d'une première valeur seuil de tension prédéterminée (Us1) et les valeurs de mesure de courant (Im) dépassent une première valeur seuil de courant prédéterminée (Is1), ou
- si les valeurs de mesure de courant (Im) dépassent une deuxième valeur seuil de courant prédéterminée (Is2),
**caractérisé en ce que**
- la première valeur seuil de courant (Is1) est inférieure à la deuxième valeur seuil de courant (Is2).

2. Agencement
- comprenant un disjoncteur à courant continu (22), une source de courant continu haute tension (11) et une ligne de transport d'énergie en courant continu haute tension (24), dans lequel le disjoncteur à courant continu (22) est connecté entre la source de courant continu haute tension (11) et la ligne de transport d'énergie en courant continu haute tension (24),
- comprenant un capteur de tension (214) pour mesurer une tension présente au niveau de la ligne de transport d'énergie en courant continu haute tension (24) de manière à obtenir des valeurs de mesure de tension (Um),
- comprenant un capteur de courant (202) pour mesurer un courant circulant à travers la ligne de transport d'énergie en courant continu haute tension (24) de manière à obtenir des valeurs de mesure de courant (Im), et
- comprenant un dispositif de commande (210) qui est configuré pour détecter, par évaluation des valeurs de mesure de tension (Um) et/ou des valeurs de mesure de courant (Im), un défaut (230) présent au niveau de la ligne de transport d'énergie en courant continu haute tension (24), et générer ensuite un signal de déclenchement (A) pour le disjoncteur à courant continu (22), dans lequel
- le dispositif de commande (210) est configuré pour générer le signal de déclenchement (A) pour le disjoncteur à courant continu (22),
- si, à l'intérieur d'un premier intervalle de temps prédéterminé, les valeurs de mesure de tension (Um) passent en dessous d'une première valeur seuil de tension prédéterminée (Us1) et les valeurs de mesure de courant (Im) dépassent une première valeur seuil de courant prédéterminée (Is1), ou
- si les valeurs de mesure de courant (Im) dépassent une deuxième valeur seuil de courant prédéterminée (Is2),
**caractérisé en ce que**
- la première valeur seuil de courant (Is1) est inférieure à la deuxième valeur seuil de courant (Is2).

3. Agencement selon la revendication 2,
**caractérisé en ce que**
- le disjoncteur à courant continu (22) est un disjoncteur à courant continu d'électronique de puissance (22) ou un disjoncteur à courant continu hybride.

4. Agencement selon l'une quelconque des revendications 2 ou 3,
**caractérisé en ce que**
- le disjoncteur à courant continu (22) est un disjoncteur à courant continu unidirectionnel (22).

5. Agencement selon l'une quelconque des revendications 2 à 4,
**caractérisé en ce que**
- la source de courant continu haute tension (11) comporte un convertisseur multiniveau modulaire (400) qui comprend une pluralité de modules de même type (1_1 ... 6_n).

6. Agencement selon la revendication 5,
**caractérisé en ce que**
- chaque module (1_1 ... 6_n) comporte au moins deux éléments de commutation électroniques (502, 506) et un dispositif de stockage d'énergie électrique (510).

7. Agencement selon l'une quelconque des revendications 2 à 6,
**caractérisé en ce que**
- la source de courant continu haute tension (11) comporte deux convertisseurs multiniveau modulaires (302, 304) dont les bornes à courant continu (PA1, NA1, PA2, NA2) sont connectées en série.

8. Agencement selon l'une quelconque des revendications 2 à 7,
**caractérisé en ce que**
- la ligne de transport d'énergie en courant continu haute tension (24) est un câble de transport d'énergie en courant continu haute tension à isolation synthétique (24).
